# EUROPÄISCHE PATENTSCHRIFT

(11) **EP 0 762 966 B1**
(45) Veröffentlichungstag und Bekanntmachung des Hinweises auf die Patenterteilung: **21.01.1998**
(21) Anmeldenummer: 94929475.5
(22) Anmeldetag: 12.10.1994
(51) Int. Cl.: B62D 65/00, B60S 5/00, B09B 5/00

(54) **VORRICHTUNG ZUR DEMONTAGE VON FAHRZEUGEN, INSBESONDERE ZU DEREN TROCKENLEGUNG**
DEVICE FOR DISMANTLING VEHICLES, IN PARTICULAR FOR DRAINING THE LATTER
DISPOSITIF DE DEMONTAGE DE VEHICULES, NOTAMMENT POUR LES PURGER

(43) Veröffentlichungstag der Anmeldung: 19.03.1997
(73) Patentinhaber: Lindner, Anton, 83131 Nussdorf (DE)
(72) Erfinder: Lindner, Anton, 83131 Nussdorf (DE)
(86) Internationale Anmeldenummer: DE9401220
(87) Internationale Veröffentlichungsnummer: WO9611835

(56) Entgegenhaltungen:
- DE-A- 4 143 251
- DE-C- 4 110 419
- DE-U- 9 207 315

## Beschreibung

Die vorliegende Erfindung betrifft eine Vorrichtung zur Demontage von Fahrzeugen, insbesondere zu deren Trockenlegung, mit den im Oberbegriff des Patentanspruchs 1 angegeben Merkmalen.

Jährlich werden allein in der Bundesrepublik Deutschland rund 2,6 bis 2,8 Millionen Pkw stillgelegt. In den kommenden 10 Jahren ist ein Anwachsen der Menge auf 3,2 bis 3,5 Millionen Fahrzeuge pro Jahr zu erwarten. Derzeit werden die Fahrzeuge von Altfahrzeugverwertern übernommen, die die noch zu verwertenden Teile ausbauen und dem Gebrauchtersatzteile-Markt zuführen. Die ausgeschlachteten Fahrzeuge gelangen anschließend, nach Entnahme der Betriebsflüssigkeiten, in die Shredder des Rohstoffhandels. Die vorliegende Erfindung offenbart eine Vorrichtung, die bei der Entnahme der Betriebsflüssigkeiten sowie beim Ausbau von verwertbaren Teilen verwendbar ist.

Die DE-U-92 07 315.8 offenbart eine gerüstartige Entsorgungsbühne zur Trockenlegung von Altfahrzeugen mit einem rechteckigen Oberrahmen, welcher über vier in dessen Eckbereichen angeordnete Säulen etwa in Kopfhöhe eines Mechanikers vom Boden beabstandet ist. An der rückwärtigen Längsseite des Oberrahmens ist eine rückwärtige Arbeitsbühne mit einem an dieser starr angebrachten Geländer vorgesehen.
Eine derartige Entsorgungsbühne weist den Nachteil auf, daß bei der Heranführung eines Altfahrzeuges mittels eines Gabelstaplers oder eines Kranes das Geländer stört und leicht beschädigt beziehungsweise zerstört werden kann. Dieser Umstand wirkt sich insbesondere auf die für das Absetzen und Aufnehmen der Altfahrzeuge benötigte Zeit und damit auf den Durchsatz und die Wirtschaftlichkeit der Anlage sowie auf die Sicherheit am Arbeitsplatz sehr nachteilig aus.

Die DE-A-41 10 419 beschreibt einen quaderförmigen, mobilen Entsorgungscontainer mit zwei seitlichen Arbeitsplattformen, welche außen an den Längsseiten des Containers knapp über dem Untergrund angebracht sind.

Um die für den Straßentransport zulässige Breite nicht zu überschreiten, können die beiden seitlichen Arbeitsplattformen heruntergeklappt und die aufgesteckten Geländer abgenommen werden. Auch auf der seitlichen Arbeitsbühne ist ein aufgestecktes, abnehmbares Geländer vorgesehen.

Ein derartiger Entsorgungscontainer weist den Nachteil auf, daß das Zuordnen der aufsteckbaren Geländerteile zu den entsprechenden Aufsteckpositionen sowie das Aufstecken der Geländerteile selbst zeitraubend, arbeitsintensiv und mit einem Verletzungsrisiko verbunden ist. Außerdem können die losen Geländerteile leicht verloren gehen. Ferner kann aus Nachlässigkeit oder Bequemlichkeit von dem Aufstecken des Geländers gänzlich abgesehen werden. Dies ist insbesondere unter Sicherheitsaspekten sehr bedenklich.

Aus dem Stand der Technik ist ferner eine Vorrichtung zur Demontage von Fahrzeugen bekannt, die einen auf Füßen stehenden rechteckigen Rahmen zur Aufflage von Fahrzeugen umfaßt. Zum Auffangen der abtropfenden Flüssigkeit wird eine balkenförmige, breite Auffangwanne, die quer über den Stand verläuft, durch Verschiebung in Längsrichtung des Rahmens unter die jeweilige Flüssigkeitsaustrittsöffnung gebracht.
Nachteilig ist bei dieser Vorrichtung, daß die verschiebbare, balkenförmige Auffangwanne bedeutend größer als erforderlich ist und unterhalb der Arbeitsbühne im Kopfbereich zu erheblichen Behinderungen führt.

Es ist ferner bekannt, anstelle einer verschiebbaren, balkenförmigen Auffangwanne fahrbare Metallcontainer, die feststehende, trichterförmige Auffangvorrichtungen aufweisen, unterhalb der jeweiligen Flüssigkeitsaustrittsöffnung zu positionieren.
Derartige Auffangvorrichtungen weisen den Nachteil auf, daß sie hohe Anforderungen an die Oberflächenbeschaffenheit des zu befahrenden Untergrundes stellen. Bereits in einem nur wenig beladenen Zustand können sie bei unebenem Untergrund nur mit großem Kraftaufwand und nur unter ständiger Kippgefahr verschoben werden. Außerdem schränken Sie im Fußbereich die Bewegungsfreiheit unterhalb der Arbeitsbühne erheblich ein.

Zum Stand der Technik gehört daneben eine Vorrichtung zur Demontage von Fahrzeugen, die anstelle eines auf Füße gestützten Auflage-Rahmens vier einzelne Hubeinheiten verwendet.
Von besonderem Nachteil ist bei dieser Vorrichtung, daß die vier Hubeinheiten in Abhängigkeit von der Länge der zu demontierenden Fahrzeuge jeweils neu positioniert und verankert werden müssen. Dies bedeutet einen erheblichen zeitlichen Aufwand. Außerdem führt das Verstellen der Hubeinheiten zu Abstimmungsproblemen mit der Auffang- und Entnahmetechnik. Ferner ist eine aufwendige Steuerelektronik für die synchrone Auf- und Abwärtsbewegung der Hubeinheiten erforderlich. Ihr Versagen führt offensichtlich zu fatalen Folgen für das Fahrzeug und gegebenenfalls den Benutzer. Plötzlich auftretende Undichtigkeiten im Hydrauliksystem stellen vor diesem Hintergrund ein erhebliches Sicherheitsrisiko dar.

Alle bisher bekannten Anlagen zur Trockenlegung von Fahrzeugen mit einem hochgelegten Rahmen zur Ablage der Fahrzeuge weisen ferner den Nachteil auf, daß während des Arbeitens an der Fahrzeugunterseite keine Demontagearbeiten an allen Seiten des oberen Teils der Karosserie sowie des Motorraums vorgenommen werden können.

Der letztgenannte Nachteil besteht zwar bei herkömmlichen grubenförmigen Vertiefungen, wie zum Beispiel bei Schmiergruben, nicht. Im Boden versenkte Arbeitsgruben sind jedoch durch den Nachteil geprägt, daß sie aufgrund der geringen Spurbreite vieler Fahrzeuge sehr schmal ausgelegt sind. Sie bieten daher für mehrere Flüssigkeitsauffang- oder Absaugmittel keinen Raum und berauben den Benutzer jeder Bewegungsfreiheit. Ferner ist ihre Herstellung sehr teuer, da gesetzliche Auflagen eine öldichte Ausführung des gesamten Grubenraums vorschreiben. Beim Ablassen von Kraftstoffen werden ferner Kraftstoffdämpfe frei, die schwerer als Luft sind und sich in der Grube anreichern. Diese Kraftstoffdämpfe stellen einerseits ein erhebliches Gesundheitsrisiko dar. Andererseits können sie zur Bildung eines explosionsfähigen Gasgemisches führen. Daher können elektrisch betriebene Geräte wie Pumpen oder Werkzeuge, die während ihres Betriebes grundsätzlich Funken erzeugen, nicht in versenkten Arbeitsgruben zum Einsatz kommen.

Aufgabe der vorliegenden Erfindung ist die Bereitstellung einer Vorrichtung zur Demontage von Fahrzeugen, insbesondere zu deren Trockenlegung, die ein besonders schnelles und fehlerfreies Absetzen und Aufnehmen eines Altfahrzeuges auf oder von der Fahrzeugauflage insbesondere mittels eines Gabelstaplers erlaubt, welche einen hohen Durchsatz von Altfahrzeugen ermöglicht, welche die Gefahr einer Beschädigung des aufgrund arbeitsschutzrechtlicher Vorschriften zwingend vorgesehenen Geländers der frontseitigen Arbeitsplattform beim Absetzen und Aufnehmen eines Altfahrzeuges mittels eines Gabelstaplers ausschließt, welche keine Gefährdung des Bedienungspersonals unter dem Aspekt der Sicherheit am Arbeitsplatz hervorruft, die unterhalb des Fahrzeugs eine optimale Kopf-und Bewegungsfreiheit sowie eine leichte Zugänglichkeit ermöglicht, die ein gleichzeitiges Arbeiten an der Fahrzeugunterseite und im oberen Bereich des Fahrzeugs erlaubt, die eine Ansammlung von explosionsfähigen Gasgemischen vermeidet, deren Funktionsfähigkeit auch bei schlechter Oberflächenbeschaffenheit des Untergrunds gewährleistet ist, die über Flüssigkeitsauffangmittel verfügt, die mit geringem Kraftaufwand unter den Flüssigkeitsaustrittsöffnungen des Fahrzeugs positioniert werden können, die kein Verschieben der das aufgelegte Fahrzeug stützenden Elemente bei einem Wechsel des Fahrzeugstyps erfordert, die beim Übergang von einem Fahrzeugtyp zu einem anderen keine Probleme mit der Abstimmung der Entnahmetechnik mit sich bringt, die keine aufwendige Steuerelektronik erfordert, die auf höchstem Sicherheitsniveau ohne Gefährdung der Gesundheit des Benutzers und unter Ausschluß jeder Unfallgefahr arbeitet sowie kostengünstig herzustellen ist.

Erfindungsgemäß wird diese Aufgabe bei einer gattungsgemäßen Vorrichtung durch die im kennzeichnenden Teil des Patentanspruchs 1 angegebenen Merkmale gelöst.

Besonders bevorzugte Ausführungsformen sind Gegenstand der Unteransprüche.

Eine beispielhafte Ausführungsform der Erfindung wird anhand der Zeichnungen näher beschrieben.

Es zeigen:
Abbildung 1 eine schematische, perspektivische Frontansicht einer halb aufgeschwenkten erfindungsgemäßen Vorrichtung von schräg rechts oben,

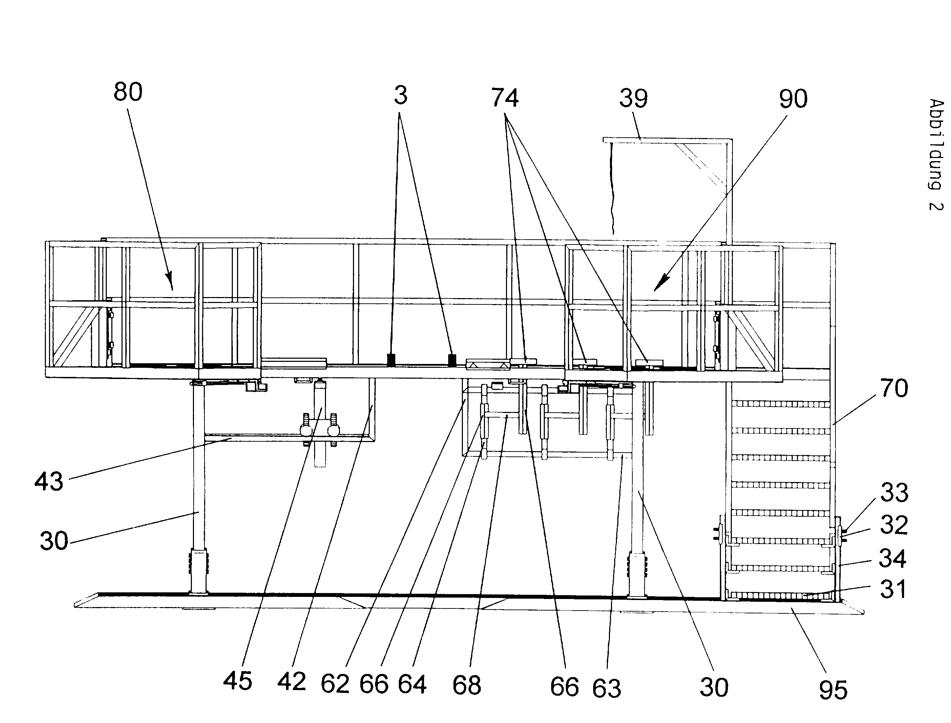

Abbildung 2 eine schematische Frontansicht einer halb aufgeschwenkten erfindungsgemäßen Vorrichtung,

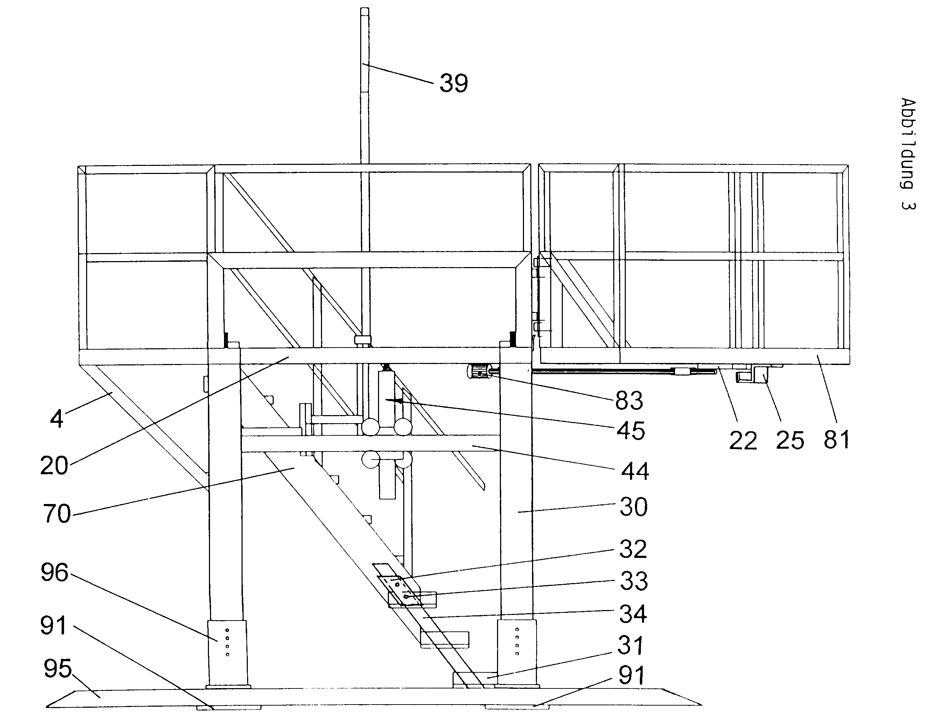

Abbildung 3 eine schematische linke Seitenansicht einer halb aufgeschwenkten erfindungsgemäßen Vorrichtung,

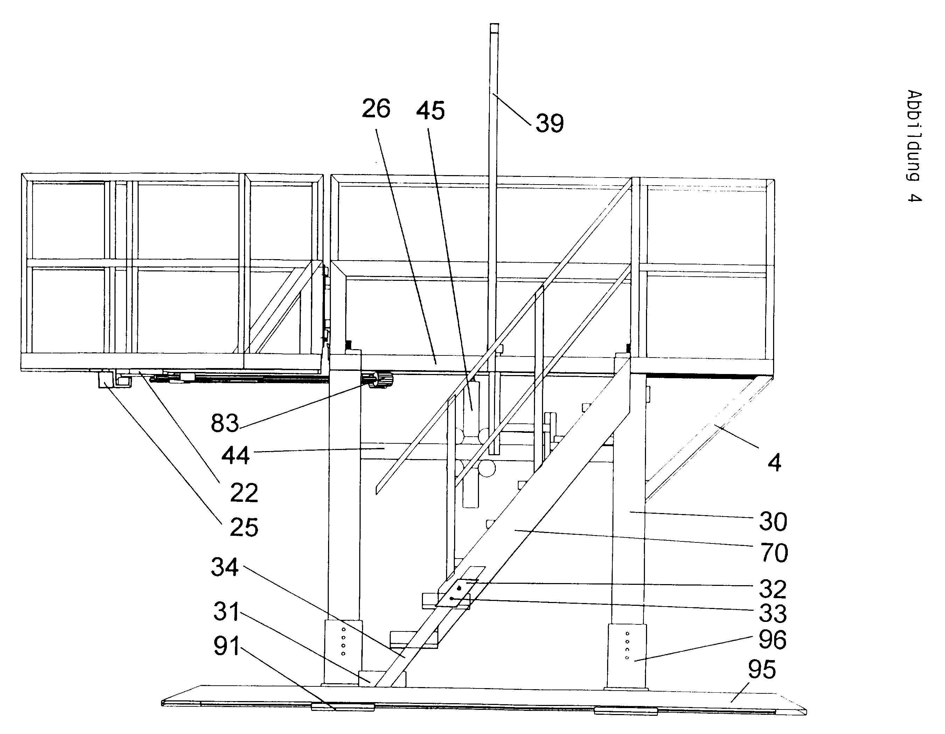

Abbildung 4 eine schematische rechte Seitenansicht einer halb aufgeschwenkten erfindungsgemäßen Vorrichtung,

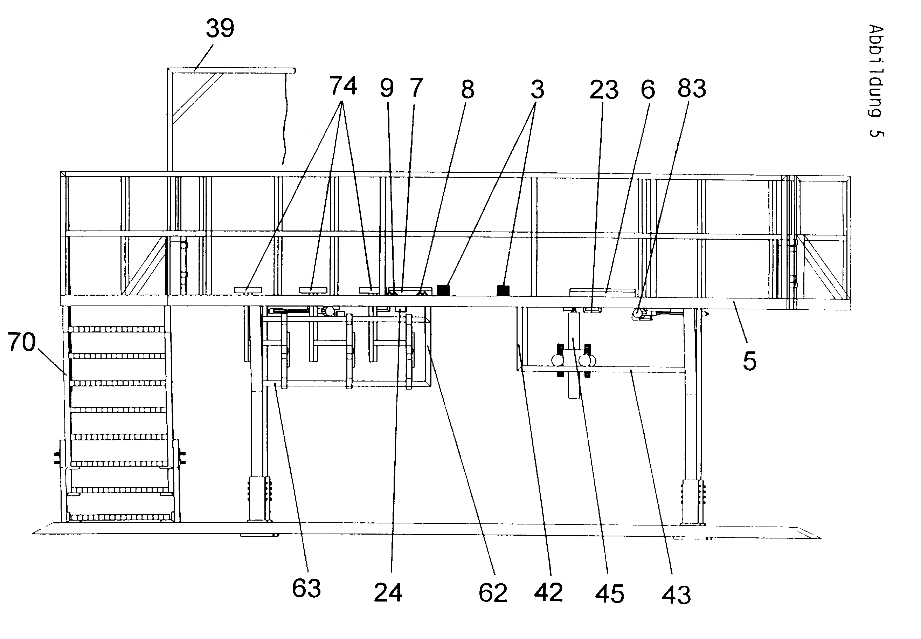

Abbildung 5 eine schematische Ansicht der Rückseite einer halb aufgeschwenkten erfindungsgemäßen Vorrichtung,

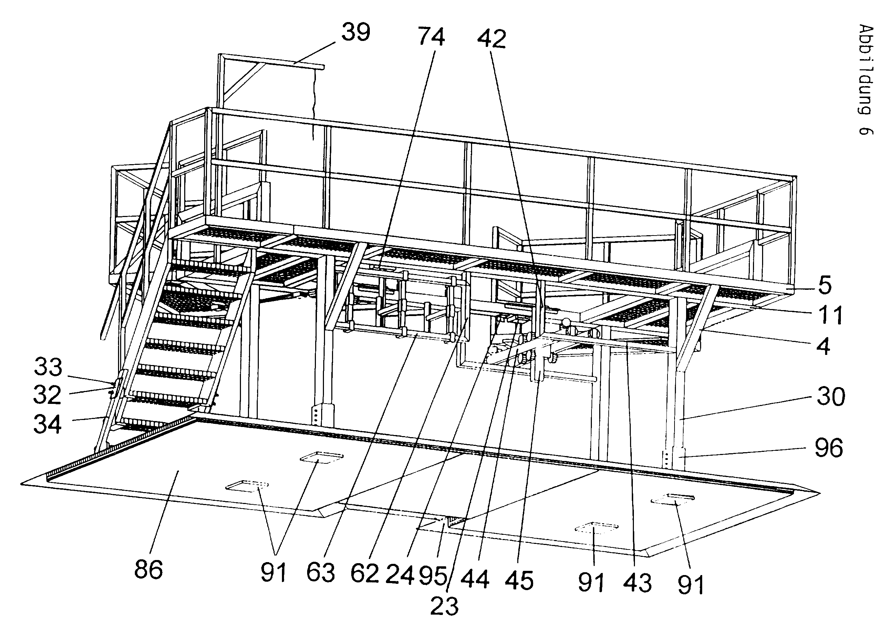

Abbildung 6 eine schematische, perspektivische Ansicht der Rückseite einer erfindungsgemäßen Vorrichtung von schräg rechts unten,

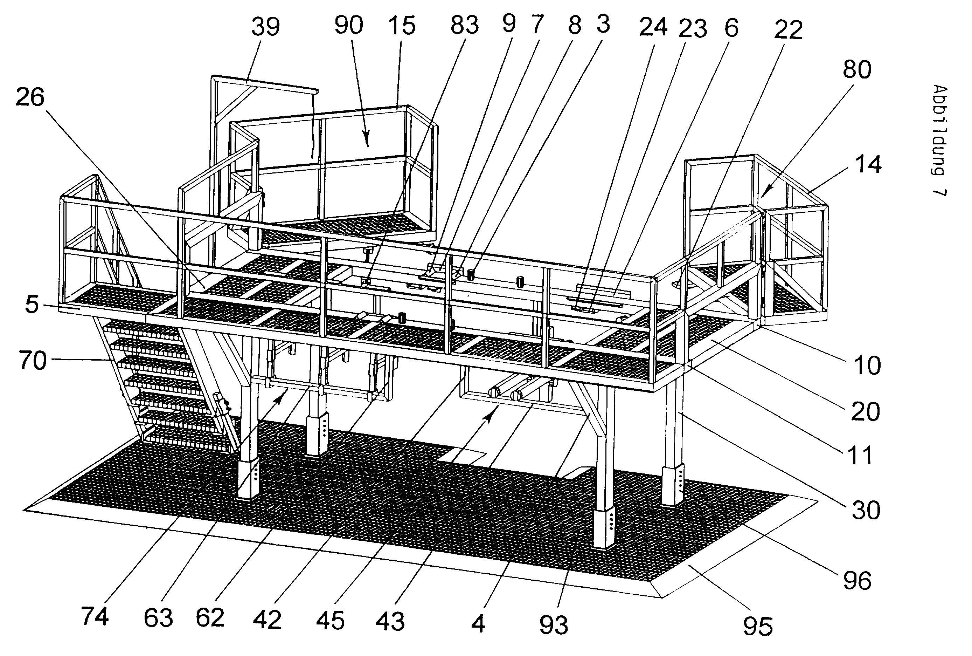

Abbildung 7 eine schematische, perspektivische Ansicht der Rückseite einer erfindungsgemäßen Vorrichtung von schräg links oben,
Abbildung 8 eine schematische, perspektivische Ansicht eines Drehgelenks zwischen einer schwenkbaren vorderen Arbeitsplattform und dem Rahmen einer erfindungsgemäßen Vorrichtung,
Abbildung 9 eine schematische, perspektivische Ansicht einer horizontal und vertikal verstellbaren Flüssigkeitsauffangvorrichtung,
Abbildung 10 eine schematische, perspektivische Ansicht einer horizontal und vertikal verstellbaren Tankbohreinrichtung,
Abbildung 11 eine schematische Ansicht einer Wanne und eines unteren Fußbereichs.

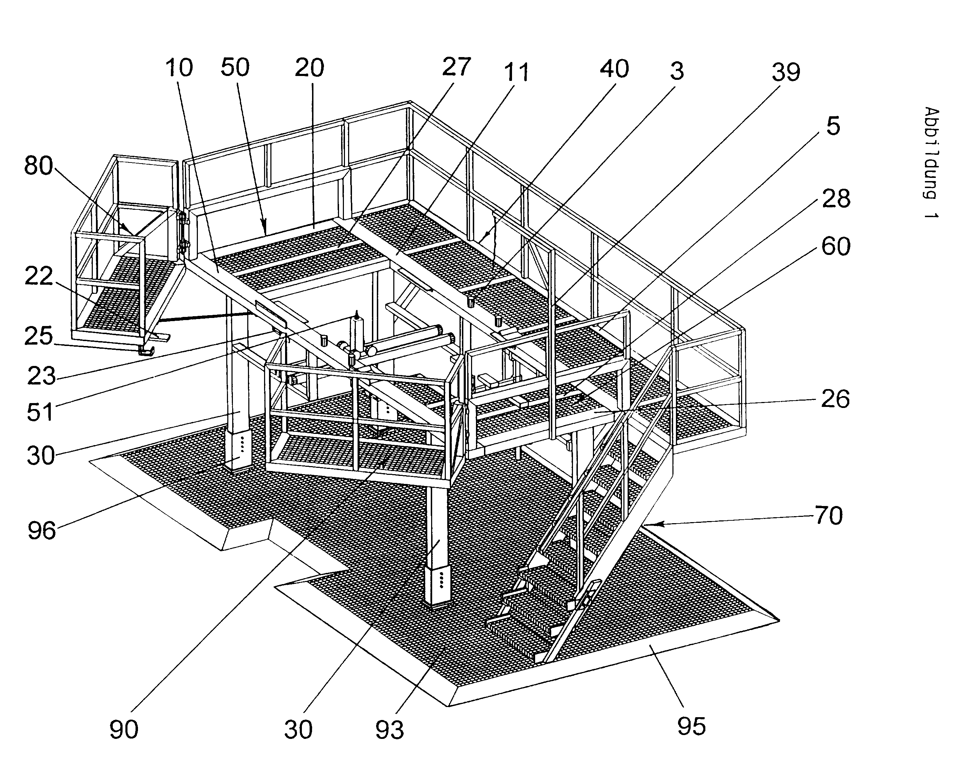

Abbildung 1 stellt eine schematische, perspektivische Frontansicht einer halb aufgeschwenkten erfindungsgemäßen Vorrichtung von schräg rechts oben dar.
Zwei Längsstreben (10, 11) sind parallel zueinander und horizontal angeordnet. An den Enden der Längsstreben (10, 11) und rechtwinklig zu diesen sind eine linke und eine rechte Querstrebe (20, 26) zueinander parallel und horizontal vorgesehen. An den Unterseiten der vier Endbereiche der Längsstreben (10, 11) ist jeweils ein Fuß (30) angebracht. Diese Füße beabstanden den durch die Längsstreben (10, 11) und die Querstreben (20, 26) gebildeten, rechteckigen Rahmen vom Boden (92). Auf diese Weise bildet der Rahmen eine äußere und obere Begrenzung eines inneren Arbeitsbereiches.

Innerhalb und/oder außerhalb dieses horizontalen Rahmens sind begehbare Arbeitsplattformen (40, 50, 60, 80, 90) ausgebildet. Sie erlauben eine Demontage des abgesetzten Fahrzeugs während dessen Trockenlegung. Auf diese Weise kann die Wirtschaftlichkeit der erfindungsgemäßen Vorrichtung verbessert werden.

Die Arbeitsplattformen sind über fest angebrachte oder abnehmbare Gitterroste begehbar. Es können selbstverständlich zum Beispiel auch plattenförmige Auflagen mit rutschfestem Belag zur Anwendung kommen. Falls erforderlich, werden die Streben zur Aufnahme der Trittflächen mit Hilfe von Querverstrebungen (4), die an den Füßen (30) ansetzen, gestützt. Zur Verringerung der Unfallgefahr werden die Arbeitsplattformen (40, 50, 60, 80, 90) sowie der Aufgang (70) nach außen durch Geländer (14, 15) abgesichert.

In einer besonders bevorzugten Ausführungsform sind die Arbeitsplattformen folgendermaßen angeordnet:
parallel zur rückwärtigen Längsstrebe (11) verläuft rückwärtig eine in der Draufsicht rechteckige, begehbare Arbeitsplattform (40), parallel zur linken äußeren Querstrebe (20) erstreckt sich in Richtung des inneren Arbeitsbereichs eine rechteckige, begehbare Arbeitsplattform (50) und parallel zur rechten Querstrebe (26) befindet sich ebenfalls in Richtung des inneren Arbeitsbereiches eine rechteckige Arbeitsplattform (60). An der vorderen Längsstrebe (10) ist eine vordere rechteckige, begehbare Arbeitsplattform (80, 90) vorgesehen. Diese vordere Arbeitsplattform kann einstückig oder geteilt ausgebildet sein. Vorzugsweise besteht sie aus zwei, gegebenenfalls seitlich voneinander beabstandeten Arbeitsplattformen (80, 90).

Der Zugang zu den begehbaren Arbeitsplattformen (40, 50, 60, 80, 90) wird durch mindestens einen Aufgang (70) ermöglicht. Aus Sicherheitsgründen, insbesondere zur Bereitstellung von Fluchtwegen, stehen vorzugsweise Aufgänge (70) mit den begehbaren Arbeitsplattformen in Verbindung. Der Aufgang (70) kann beispielsweise an jeder der Arbeitsplattformen angebracht sein. Vorzugsweise ist er an einer der seitlichen oder der rückwärtigen Arbeitsplattformen vorgesehen.

In einer besonders bevorzugten Ausführungsform der Erfindung überragt die rückwärtige Arbeitsplattform (40) seitlich die rechte seitliche Arbeitsplattform (60). An diesem seitlich hervorragenden Teil der rückwärtigen Arbeitsplattform (40) kann der Aufgang in beliebiger Position angebracht werden. Beispielsweise kann der Aufgang (70) so vorgesehen werden, daß bei Betrachtung von oben die Längsachse des Aufgangs (70) parallel zur seitlichen Querstrebe (26) nach vorne, nach hinten oder im rechten Winkel zu dieser verläuft.
Besonders bevorzugt ist eine Anbringung des Aufgangs (70) in der Weise, daß seine Längsachse parallel zur Querstrebe (26) verläuft, daß er nach vome geneigt ist, und daß er am vorderen Teil des seitlich hervorragenden Teils der rückwärtigen Arbeitsplattform (40) befestigt ist.
Eine entsprechende Anbringung eines Aufgangs (70) ist möglich, wenn die rückwärtige Arbeitsplattform (40) die linke Arbeitsplattform (50) seitlich überragt.
Die Füße (30) können zur Anpassung der Vorrichtung an die Körpergröße des Benutzers höhenverstellbar ausgebildet sein. Um den treppen- oder stufenförmigen Aufgang (70) an den unterschiedlichen Abstand zwischen dem Rahmen der Vorrichtung und dem Boden anpassen zu können, wird beispielsweise der Aufgang (70) an der entsprechenden Arbeitsplattform (40, 50, 60, 80, 90) über ein Drehgelenk nach unten und oben schwenkbar angebracht und an seinem unteren Ende zum Beispiel mit Rädern abgestützt.
Alternativ hierzu kann der Aufgang (70) an der entsprechenden Arbeitsplattform starr befestigt und die unterste Stufe oder Treppe (31) entlang der Längsachse des Aufgangs höhenverstellbar ausgebildet sein. Beispielsweise weist die unterste Stufe oder Treppe (31) eine im wesentlichen stab- oder rohrförmige nach oben gerichtetete Verlängerung (34) auf, die parallel zur Längsachse der Treppe ausgerichtet ist. Diese Verlängerung (34) verläuft vertikal verschiebbar in einer Führung (32) mit U-förmigem Querschnitt. Die Schenkel dieser U-förmigen Führung sind an der seitlichen Fläche des Aufgangs (70) befestigt. Mit einer Stellschraube (33) kann die Verlängerung (34) in der Führung (32) arretiert werden.

Der Abstand der parallelen Längsstreben (10, 11) und damit die Länge der Querstreben (20, 26, 27, 28) liegt im Bereich von 0,90 bis 4,0 m, vorzugsweise von 1,0 bis 2,50 m, insbesondere von 1,4 bis 2,0 m. Vorzugsweise entspricht er im wesentlichen der Spurbreite eines Fahrzeugs. Die Länge der Längsstrebe (10) beträgt etwa 4,0 bis 10,0 m, vorzugsweise 5,0 bis 8,0 m, insbesondere 5,5 bis 7,0 m.

Grundsätzlich wird ein Fahrzeug in der Weise auf dem Rahmen abgesetzt, daß dessen Längsachse parallel zu den Längsstreben (10,11) verläuft. Dabei kann das Vorderteil des Fahrzeugs entweder nach rechts oder nach links weisen.

Stellvertretend für beide Möglichkeiten wird nachfolgend eine Ausführungsform der erfindungsgemäßen Vorrichtung beschrieben, bei der das Vorderteil eines aufgesetzten Fahrzeugs mit Frontmotor und rückwärtig angeordnetem Tank nach rechts weist.
Ist ein Fahrzeug mit Heckmotor und im Frontbereich angeordnetem Tank trockenzulegen, so sollte dessen Vorderteil bei Verwendung der nachfolgend beschriebenen Ausführungsform nach links weisen.

Auf der Oberseite jeder Längsstrebe (10, 11) sind mindestens zwei schwellenförmige Mittel (8, 9) zur exakten Aussrichtung eines auf den Längsstreben (10, 11) abgesetzten Fahrzeugs in dessen Längsrichtung vorgesehen. Grundsätzlich können schwellenförmige Mittel (8, 9) bei frontaler Betrachtung der Vorrichtung auf der linken und/oder der rechten Hälfte der Längsstreben (10, 11) vorgesehen sein. Um die Vorrichtung bei unterschiedlichen Fahrzeuglängen verwenden zu können, empfiehlt sich jedoch die Anbringung nur auf einer Hälfte der Längsstreben (10, 11).

Bei den schwellenförmigen Mitteln (8, 9) handelt es sich vorzugsweise um Leisten, die rechtwinklig zu den Längsstreben (10, 11) montiert sind und im wesentlichen einen Querschnitt aufweisen, der einem auf dem Kopf stehenden Buchstaben "V" entspricht. Die schwellenförmigen Mittel (8, 9) sind so eng benachbart angeordnet, daß sie auf das gleiche Rad einwirken. In der Regel sind sie 10 bis 80 cm, vorzugsweise 30 bis 70 cm, insbesondere 40 bis 50 cm, voneinander beabstandet.
Die Mitte zwischen dem linken und dem rechten schwellenförmigen Mittel (8, 9) ist vorzugsweise so weit von der rechten, begehbaren Arbeitsplattform (60) entfernt, daß der nach rechts weisende, vordere Abschnitt eines ordnungsgemäß abgesetzten Fahrzeugs nicht wesentlich die rechte Arbeitsfläche (60) überragt, sondern von unten frei zugänglich bleibt. Die Mitte zwischen den Mitteln (8, 9) ist demnach 0,2 bis 2,0 m, vorzugsweise 0,3 bis 1,5 m, insbesondere 0,5 bis 1,0 m von dem inneren Rand der seitlichen Arbeitsplattform (60) distanziert.

An den Bereichen der Längsstreben (10, 11), auf die die Räder von Fahrzeugen zu liegen kommen können, sind gegebenenfalls Verbreiterungen angebracht, die in Richtung des inneren Arbeitsbereichs ragen.
Dabei handelt es sich in der Regel um L-förmige Profile, die mit einem Schenkel an der senkrechten, zum inneren Arbeitsbereich weisenden Fläche der Längsstreben (10, 11) befestigt sind und deren freier Schenkel horizontal in Richtung des inneren Arbeitsbereichs weist. Durch diese Verbreiterungen wird die erfindungsgemäße Vorrichtung unterschiedlichen Spurbreiten von Fahrzeugen angepaßt.

An den beiden Bereichen der vorderen Längsstrebe (10), auf die die Räder von Fahrzeugen zu liegen kommen können, sind ferner zwei sogenannte Abstreifmittel (6, 7) vorgesehen.
Als Abstreifmittel (6, 7) dient eine im wesentlichen rechteckige Platte, die nahezu senkrecht auf der oberen Fläche der vorderen Längsstrebe (10) angebracht ist und deren Längsachse dicht beabstandet und parallel zur vorderen, oberen horizontalen Kante der vorderen Längsstrebe (10) verläuft. Die Abstreifmittel (6, 7) erleichtern das Absetzen eines Fahrzeugs auf dem Rahmen per Gabelstapler, da sie für den Fahrer eine gewisse Orientierungsbeziehungsweise Anpeilhilfe darstellen. Darüberhinaus führen sie zu dem Vorteil, daß der Gabelstapler beim Herausziehen der unter dem abgesetzten Fahrzeug befindlichen Gabel nicht Gefahr läuft, unbeabsichtigt das Fahrzeug wieder vom Rahmen zu ziehen. Denn die auf der vorderen Längsstrebe (10) aufsitzenden Räder bleiben an den Abstreifmitteln (6, 7) hängen, selbst wenn die Gabel des Gabelstaplers unter dem Fahrzeug weggezogen wird, solange das Fahrzeug nicht, beziehungsweise noch nicht, vollständig abgesetzt ist.
Wird die Gabel des Gabelstaplers nicht erst nach dem vollständigen Aufsitzen des abzuladenden Fahrzeugs unter dem Fahrzeug weggezogen, sondern bereits dann, wenn das Fahrzeug noch zumindest teilweise auf der Gabel aufliegt, so kommen das rechte Vorderrad und das rechte Hinterrad kraftschlüssig mit den Abstreifmitteln (6, 7) in Kontakt. Auf diese Weise kann verhindert werden, daß das Fahrzeug zu weit hinten in Richtung der Längsachse (11) abgesetzt wird. Dies hätte zur fatalen Folge, daß nur die linken Vorder- und Hinterräder, nicht jedoch die rechten Vorder- und Hinterräder auf der erfindungsgemäßen Vorrichtung aufliegen. Schließlich gewährleisten die Abstreifmittel (6, 7) eine zu den Längsstreben (10, 11) exakt parallele Ausrichtung des Fahrzeugs.

Von besonderer Bedeutung für die erfindungsgemäße Vorrichtung ist die vordere Arbeitsplattform (80, 90). Die diese betreffenden, nachfolgenden Ausführungen gelten jedoch sinngemäß auch für die beiden seitlichen Arbeitsplattformen (50, 60) , insbesondere für die rückwärtige Arbeitsplattform (40).

Die vordere Arbeitsplattform kann einstückig ausgebildet sein und sich über die gesamte Länge der vorderen Längsstrebe (10) erstrecken. In einer beispielhaften Ausführungsform der erfindungsgemäßen Vorrichtung ist sie mit der vorderen Längsstrebe (10) starr verbunden. Wird das zu demontierende Fahrzeug mit Hilfe eines Gabelstaplers auf dem Rahmen der erfindungsgemäßen Vorrichtung abgesetzt, so sind aufgrund der starr angebrachten vorderen Arbeitsplattform, beziehungsweise aufgrund ihres Geländers, Behinderungen des Gabelstaplers denkbar.
Verfügt der Gabelstapler nur über eine kurze Gabel oder ein geringes Eigengewicht, so kann er femer ein Fahrzeug nicht über die vordere Arbeitsplattform hinweg auf dem Ablagerahmen der Vorrichtung absetzen. (In diesem Falle ist ein Gabelstapler mit größerem Eigengewicht und eine umlegbare Ausgestaltung des Geländers der vorderen Arbeitsplattform erforderlich. Alternativ hierzu kann ein Kran oder eine Laufkatze zum Einsatz kommen).

Es hat sich daher als besonders vorteilhaft erwiesen, die einstückige, durchgehende vordere Arbeitsplattform entfernbar, beziehungsweise schwenkbar auszubilden. Hierbei kommt insbesondere eine Schwenkbewegung zur Seite oder nach unten in Betracht. In einer besonders bevorzugten Ausführungsform wird die einstückig ausgebildete vordere Arbeitsplattform über ein seitlich angebrachtes Drehgelenk zur Seite geschwenkt.
Wenn die vordere, durchgehende Arbeitsplattform besonders robust und massiv ausgeführt wird, besitzt sie ein erhebliches Gewicht. Dies kann dazu führen, daß das Drehgelenk zumindest etwas fedemd nachgibt, wodurch die vordere Arbeitsplattform in angeschwenktem Zustand seitlich abfällt und/oder federt. Außerdem ist ein Schwenkvorgang in diesem Fall sehr raumfordernd.
Aus diesem Grund hat sich als besonders vorteilhaft herausgestellt, anstelle einer einzelnen, sich über die gesamte Länge der vorderen Längsstrebe (10) erstreckenden Arbeitsplattform zwei separate, schwenkbare Arbeitsplattformen vorzusehen. Ihr Gewicht verteilt sich nun auf zwei Drehgelenke, wodurch sich eine bessere Verwindungssteifigkeit der erfindungsgemäßen Vorrichtung ergibt.
Die vorderen Arbeitsplattformen (80, 90) sind über seitliche Drehgelenke schwenkbar an linken und rechten senkrechten Stützen (12, 13), die auf der Oberseite der Enden der vorderen Längsstrebe (10) vorgesehen sind, angebracht. Die Länge der beiden vorderen Arbeitsplattformen (80, 90) kann so gewählt werden, daß sie sich in angeschwenktem Zustand nahezu berühren. Da die vorderen Arbeitsplattformen für Trockenlegungsarbeiten und die Entfernung der Räder hauptsächlich nur im vorderen beziehungsweise hinteren Bereich eines Fahrzeugs benötigt werden, kann der Abstand zwischen ihnen jedoch auch bedeutend größer gewählt werden.

Der Schwenkvorgang kann per Hand oder mit Hilfe elektrischer, hydraulischer oder pneumatischer Antriebsmittel (83) bewerkstelligt werden. Wird die Schwenkbewegung von Hand durchgeführt, kommt es leicht dazu, daß die vordere Arbeitsplattform mit zuviel Schwung zur Seite geschwenkt wird. In diesem Fall stößt die schwenkbare Arbeitsplattform beispielsweise an einer der äußeren Querstreben (20, 26) mit soviel Wucht an, daß sie wieder zurückschwenkt. Zur Vermeidung einer durch das Zurückschwenken bedingten Unfallgefahr wird vorzugsweise ein elastischer Stopper in Verbindung mit einem vorgeschalteten Bremsmittel verwendet. Als Bremsmittel kommt insbesondere ein zumindest etwas nach vorne geneigter, im wesentlichen horizontal ausgerichteter Metallstreifen zur Anwendung. Er ist auf der Außenseite der äußeren Querstreben (20, 26) und parallel zu dieser so angebracht, daß er die vordere Längsstrebe (10) in Frontrichtung überragt und daß sein vorderes Ende knapp unterhalb der Höhe der äußeren Querstrebe der vorderen Arbeitsplattform zu liegen kommt. Wird die vordere Arbeitsplattform zur Seite geschwenkt, läuft sie auf dem federnd nachgebenden Bremsmittel auf, wobei ein Großteil der kinetischen Energie der vorderen Arbeitsplattform absorbiert wird. Ein am hinteren Ende des Bremsmittels befestigtes, elastisches Stopelement absorbiert gegebenenfalls die noch vorhandene kinetische Energie der vorderen Arbeitsplattform. Nach dem Stillstand der vorderen Arbeitsplattform wird diese durch das Bremsmittel arretiert und am Zurückschwenken gehindert. Auf einen separaten Verriegelungsmechanismus für die geöffnete Stellung der schwenkbaren vorderen Arbeitplattform kann somit verzichtet werden.

Gegenüber elektronischen Antriebsmitteln sind pneumatische Antriebsmittel bevorzugt, da sie jegliche Funkenbildung und damit jede Explosionsgefahr im Zusammenhang mit freigesetzten Treibstoffdämpfen vermeiden. Daß der pneumatische oder hydraulische Antrieb die bevorzugte Antriebsart für alle im Rahmen der vorliegenden Erfindung zum Einsatz kommenden Gerätschaften ist, ist vor diesem Hintergrund offensichtlich. Außerdem kann durch die Verwendung von ausschließlich pneumatisch oder hydraulisch betriebenen Gerätschaften bereits heute noch in der Diskussion befindlichen zukünftigen gesetzlichen Auflagen entsprochen werden.

Zur Ausführung des Schwenkvorgangs wird beispielsweise an der Unterseite des Längsträgers (10) in einiger Entfernung von dem Drehgelenk ein pneumatischer Stellmotor (83) horizontal schwenkbar angebracht. Dieser weist eine spindelförmige Verlängerung auf, die sich in Richtung der betreffenden Arbeitsplattform erstreckt. An der Unterseite der rückwärtigen Längsstrebe (82) der vorderen Arbeitsplattform (80, 90) befindet sich an einer dem Antriebsmittel (83) gegenüberliegenden Stelle eine im wesentlichen rohrförmige, horizontal schwenkbare Führung mit Innengewinde. In diese Führung greift die spindelförmige Verlängerung des Antriebsmittels (83) ein und schließt, beziehungsweise öffnet, je nach Drehrichtung des Stellmotors die vordere Arbeitsplattform.
Zusätzlich können Sicherheits-Mittel zur Erkennung von Widerständen während des Öffnens oder Schließens vorgesehen werden, die ein sofortiges Anhalten des Stellmotors bei Wahrnehmung eines entsprechenden Widerstandes veranlassen.

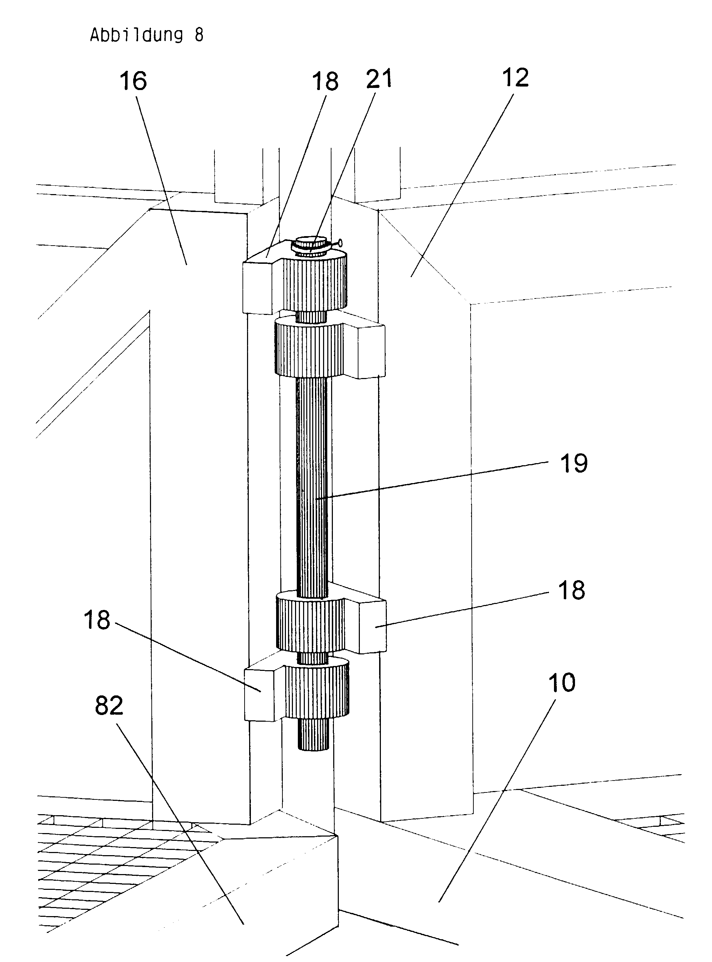

Die schwenkbare Drehgelenk- Verbindung weist beipielsweise den in Abbildung 8 dargestellten Aufbau auf:
Auf der vorderen Längsstrebe (10) sind an deren äußeren Enden zwei senkrechte Stützen (12, 13) vorgesehen. Jede Stütze (12, 13) trägt mindestens zwei vertikal übereinander angeordnete Lagerböcke (18). Auf jeder der beiden vorderen Arbeitsplattformen (80, 90) befinden sich an deren seitlichen, rückwärtigen Ecken senkrechte Stützen (16, 17). Diese sind jeweils mit mindestens zwei vertikal übereinander liegenden Lagerböcken (18) bestückt.
Vorzugsweise sind die Lagerböcke an den Stützen (12, 13; 16, 17) in vertikaler Richtung so angebracht, daß - von oben beginnend - zuerst ein Lagerbock der Rahmen-Stütze (12, 13) vorgesehen ist, dem mit möglichst geringem Abstand der obere Lagerbock der Arbeitsplattform-Stütze (16, 17) folgt. Gegebenenfalls kann unmittelbar unter dem oberen Lagerbock der Arbeitsplattform-Stütze ein zweiter Lagerbock der Rahmen-Stütze vorgesehen werden. Es folgt dann ein Zwischenraum, der in Abhängigkeit von der Länge der Stützen (12, 13; 16, 17) gewählt wird. An diesen Zwischenraum schließt ein weiterer Lagerbock der Rahmen-Stütze (12, 13), dem unmittelbar ein Lagerbock der Arbeitsplattform-Stütze folgt. Eine besondere Verwindungssteifigkeit des Drehgelenks wird erreicht, wenn der untere Lagerbock der Arbeitsplattform-Stütze von einem weiteren Lagerbock der Rahmen-Stütze eingefaßt wird.
Die Lagerböcke (18) der Rahmen-Stützen (12, 13) und der Arbeitsplattform-Stützen (16, 17) sind vertikal übereinander so ausgerichtet, daß sie ineinander greifen. Durch jeden Lagerbock ragt senkrecht eine Welle (19) die alle Lagerböcke kraftschlüssig miteinander verbindet.
Ein vorzugsweise am oberen Ende der Welle (19) vorgesehener Stellring (21) mit einer Stellschraube sorgt dafür, daß die Welle (19) nicht nach unten aus den Lagerböcken (18) herausrutscht.
Jeder Lagerbock (18) weist ein herkömmliches Lager, zum Beispiel ein Gleit-, Kugel- oder Rollenlager zur Aufnahme der Welle (19) auf.

Zur Gewährleistung einer absolut waagerechten und nicht federnden Ausrichtung der angeschwenkten vorderen Arbeitsplattformen (80, 90) empfiehlt sich beispielsweise die Anbringung eines Auflaufschuhs (23) und eines in diesen eingreifenden zungenförmigen Vorsprungs (22).

An der Unterseite der vorderen Längsstrebe (10) wird möglichst weit vom Drehgelenk beabstandet ein Auflaufschuh (23) vorgesehen. Er weist in der Draufsicht eine rechteckige Grundfläche und bei frontaler Betrachtung einen im wesentlichen U-förmigen Querschnitt auf. Die freien Schenkel des U's sind an der Unterseite der Längsstrebe (10) befestigt. Die Längsachse des Auflaufschuhs (23) steht im rechten Winkel zur Längsachse der Längsstrebe (10).
Im gleichen Abstand vom Drehgelenk wird an der Unterseite der rückwärtigen Strebe (82) der vorderen Arbeitsplattform (80, 90) ein zungenförmiger Vorsprung (22) angebracht. Dieser überragt die rückwärtige Strebe (82) nach hinten und ist so ausgebildet, daß er bei angeschwenkter vorderer Arbeitsplattform kraftschlüssig in den Auflaufschuh (23) eingreift.

Zur Entlastung des Antriebmittels (83) in angeschwenkter Stellung und zur Verhinderung eines unbeabsichtigten Aufschwenkens wird ein mechanischer, elektrischer, magnetischer oder pneumatischer Verriegelungsmechanismus (24, 25) zum Ver- und Entriegeln der angeschwenkten vorderen Arbeitsplattformen (80, 90) vorgesehen. Hierbei kann es sich beispielsweise um eine hakenförmig nach unten ausgebildete Falle (24) handeln, die in einen Bolzen mit Kerbe oder in ein hakenförmig nach oben gebogenes Verriegelungsteil (25) greift.

Vorzugsweise wird an der Unterseite des inneren Endes der rückwärtigen Strebe (82) der vorderen Arbeitsplattform (80, 90) ein bei seitlicher Betrachtung im wesentlichen rechtwinklig nach oben aufgebogenes Metallteil (25) angebracht, das die rückwärtige Strebe (82) nach hinten überragt. Im gleichen Abstand vom Drehgelenk wird an der Unterseite der Längsstrebe (10) eine Falle (24) vorgesehen. Die Falle (24) kann bei seitlicher Betrachtung einem liegenden "L" entsprechen, wobei der vordere kurze Schenkel senkrecht nach unten und der hintere lange Schenkel horizontal im wesentlichen parallel zur Oberfläche der Unterseite der Längsstrebe (10) ausgerichtet ist. Die Längsachse dieses L's verläuft rechtwinklig zur Längsachse der Längsstrebe (10). An ihrem hinteren Ende ist die L-förmige Falle vertikal schwenkbar gelagert. Ist die Falle (24) aus Metall gefertigt, kann sie beispielsweise durch Aktivierung eines Elektromagneten angehoben werden, wodurch das Verriegelungsteil (25) freigegeben wird. Bevorzugt wird aus den bereits dargelegten Gründen jedoch eine pneumatische Anhebeeinrichtung. Versieht man den senkrechten Teil der einem liegenden L entsprechenden Falle (24) mit einer entsprechenden Schrägung, so bahnt sich das Verriegelungsteil (25) auch ohne Betätigung einer Fallen-Hebeeinrichtung selbständig den Weg in die Falle (24).
Gegebenenfalls steht der Verriegelungsmechanismus (24, 25) mit einer Wanneneinrichtung in Verbindung, die ein Licht- oder Schallsignal aussendet, wenn der Verriegelungsmechanismus nicht geschlossen ist. Auf diese Weise wird einem unbeabsichtigten Betreten der vorderen Arbeitsplattform in nicht verriegeltem, ungesicherten Zustand entgegengewirkt.

Wie bereits ausgeführt, kann die einteilige oder mehrteilige vordere Arbeitsplattform auch starr mit der vorderen Längsstrebe (10) verbunden sein. Eine derartige Ausführungsform kann insbesondere dann von Vorteil sein, wenn Fahrzeuge nur mit Hilfe eines Krans oder Laufkatze auf dem Rahmen der erfindungsgemäßen Vorrichtung abgesetzt werden.

Soll eine Ausführungsform mit einer durchgehenden, einteiligen vorderen Arbeitsplattform mit einem Gabelstapler bedient werden, bedarf es hierfür eines schweren Gerätes mit langen Gabeln. Schließlich kann der Gabelstapler nur bis zur vorderen horizontalen Strebe (81) der vorderen Arbeitsplattform und nicht bis zur vorderen Längsstrebe (10) des Rahmens vorfahren.

Außerdem sollte in diesem Falle das Geländer (14, 15) so umgelegt werden können, daß es durch die Gabeln des Gabelstaplers beim Absetzen eines Fahrzeugs nicht zerstört wird. Zu diesem Zweck werden das frontale und die beiden seitlichen Gitterteile beispielsweise mit Hilfe von frontal und seitlich an den horizontalen Streben der vorderen Arbeitsplattform angebrachten Drehgelenken zum Beispiel vertikal schwenkbar gelagert. Durch die Entfernung von Verriegelungsstiften, die senkrecht durch übereinander liegende Laschen von benachbarten Geländerteilen ragen, können die Geländerteile voneinander gelöst und einzeln nach unten geschwenkt werden. Zur Durchführung des Schwenkvorgangs können Seilzüge oder elektrische, hydraulische oder pneumatische Mittel verwendet werden. Es ist selbstverständlich, daß für das Umlegen der Geländerteile grundsätzlich sämtliche Schwenkrichtungen, insbesondere auch zur Seite gerichtete, in Betracht kommen.

Neben der Ausführungsform mit einer durchgehenden vorderen Arbeitsplattform, die starr an der vorderen Längsstrebe (10) befestigt ist, kann auch eine Ausführungsform zur Anwendung kommen, die zwei kleinere vordere Arbeitsplattformen aufweist, die seitlich voneinander beabstandet, ebenfalls starr an der vorderen Längsstrebe (10) befestigt sind.
Von Vorteil ist es hierbei, den seitlichen Abstand zwischen den beiden vorderen Arbeitsplattformen mindestens so groß zu wählen, daß ein Gabelstapler bis zur Längsstrebe (10) vorfahren kann. Bei einer derartigen Ausführungsform hebt ein Gabelstapler das zu demontierende Fahrzeug höher als das Geländer (14, 15) der vorderen Arbeitsplattformen an, so daß die seitlich über die Gabel hinausragenden Fahrzeugteile nicht mit dem Geländer kollidieren. Es ist in diesem Fall nicht zwingend erforderlich, die Bestandteile der Geländer (14, 15) der vorderen Arbeitsplattformen voneinander trennbar und umlegbar auszubilden.
Vorzugsweise werden jedoch auch bei dieser Ausführungsform die Geländerteile der vorderen Arbeitsplattformen (80, 90) voneinander trennbar und umlegbar ausgestaltet. Zu diesem Zweck kann wie oben bei der einteiligen, durchgehenden vorderen Arbeitsplattform beschrieben, vorgegangen werden. Auf diese Weise wird vermieden, daß die seitlich über die Gabel hinausragenden Fahrzeugteile bei einer versehentlich zu niedrigen Anfahrt des Gabelstaplers die Geländer (14, 15) beschädigen.

Wie bereits ausgeführt, können die Füße (30) zur Anpassung an die Körpergröße des Benutzers auf verschiedene Weise höhenverstellbar sein. Die Höhenverstellung der Füße (30) und damit des Auflagerahmens erfolgt insbesondere mechanisch. Hierdurch werden die Herstellungskosten der erfindungsgemäßen Vorrichtung niedrig gehalten.

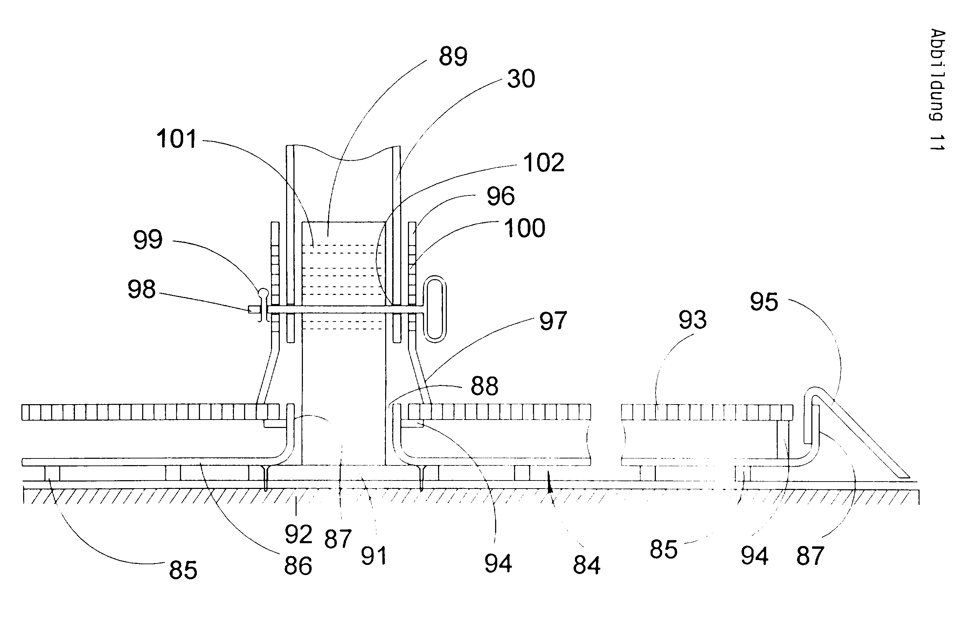

Eine beispielhafte mechanische Einrichtung zur Höhenverstellung ist in Abbildung 11 dargestellt.
Zur Verankerung der erfindungsgemäßen Vorrichtung mit dem Boden (92) kann eine horizontale Sockelplatte (91) vorgesehen werden, die mit Schrauben an diesem befestigt ist. Auf der horizontalen Sockelplatte (91) befindet sich ein senkrechtes, im wesentlichen quaderförmiges Sockelelement (89). Das senkrechte Sockelelement (89) weist in der Draufsicht geringfügig kleinere Abmessungen als der Innenraum des Fußes (30) auf. Das senkrechte Sockelelement (89) ragt in das untere Ende des Fußes (30), wobei der Fuß (30) gegenüber dem senkrechten Sockelelement (89) vertikal verschiebbar ist. Das senkrechte Sockelelement (89) weist mehrere zueinander parallele und übereinander vorgesehene horizontale Bohrungen (101) auf. Im unteren Bereich des Fußes (30) sind zwei Bohrungen (102) auf gleicher Höhe und auf gegenüberliegenden Seiten vorgesehen, die bei einer vertikalen Verschiebung des Fußes (30) mit jeder der horizontalen Bohrungen (101) des senkrechten Sockelelements (89) fluchten.
Zur Arretierung des Fußes (30) in einer bestimmten Höhe wird ein Verriegelungsstift (98) durch eine erste Bohrung (102) des Fußes (30), durch irgendeine der Bohrungen (101) des senkrechten Sockelelements (89) und abschließend durch eine zweite Bohrung (102) des Fußes (30) geführt und mit einem Splint (99) gesichert.

In der untersten Position des Fußes (30) befinden sich die beiden Bohrungen (102) des Fußes auf gleicher Höhe mit der untersten Bohrung (101) des senkrechten Sockelelements (89) und fluchten mit dieser. Der Verriegelungsstift ist auf einer Seite beispielsweise durch einen ringförmigen Griff und auf der anderen Seite durch einen Splint (99) vor einem unbeabsichtigten Entfernen geschützt. Durch das Herausziehen des Verriegelungsstiftes (98) und ein Anheben des Fußes (30), gefolgt von einer erneuten Einführung des Verriegelungsstiftes in die beiden Fußbohrungen (102) und eine höher liegende Bohrung (101) des senkrechten Sockelelements (89), kann die Höhe der erfindungsgemäßen Vorrichtung mit minimalem Kostenaufwand in Entsprechung zur Körpergröße des Benutzers vergrößert werden.

Selbstverständlich ist es möglich, die Höhenverstellung des Fußes (30) statt dessen durch bekannte elektrische, hydraulische oder pneumatische Mittel vorzunehmen.

Die begehbaren Arbeitsplattformen (40, 50, 60, 80, 90) sowie der Aufgang (70) weisen jeweils eine Breite im Bereich von 0,2 bis 2,5 m, vorzugsweise von 0,4 bis 2,0 m, insbesondere von 0,6 bis 1,5 m auf.
Zur Sicherheit der Benutzer sind sie mit einer geländerförmigen Umzäunung versehen. Die Trittflächen bestehen zum Beispiel aus Gitterrosten oder Platten mit einem rutschfesten Belag. Sie sind in Rost- oder Platteneinfassungen gelagert.

Derartige Trittflächen befinden sich zum Beispiel zwischen der linken äußeren Querstrebe (20) und einer benachbarten, inneren Querstrebe (27), sowie zwischen der rechten äußeren Querstrebe (26) und einer benachbarten, inneren Querstrebe (28). Um die erfindungsgemäße Vorrichtung für verschiedene Fahrzeugtypen mit stark unterschiedlichen Fahrzeuglängen verwenden zu können, werden mehrere innere Querstreben (27, 28) vorgesehen, wobei der Zwischenraum zwischen jeder dieser weiteren inneren Querstreben und der zugehörigen benachbarten äußeren Querstrebe durch eine abnehmbare zusätzliche Trittfläche überbrückt wird. Bei besonders kurzen Fahrzeugen werden diese zusätzlichen Trittflächen aufgelegt, bei besonders langen Fahrzeugen werden sie dagegen entfernt, um einen optimalen Zugang zur Fahrzeugunterseite zu gewährleisten.

Trittflächen der beschriebenen Art sind auch zwischen der hinteren Längsstrebe (11) und einer hierzu parallel und rückwärtig verlaufenden horizontalen Längsstrebe (5) vorgesehen. Um die erlaubte Breite für einen Transport auf der Straße nicht zu überschreiten, kann es erforderlich sein, die rückwärtige Längsstrebe (5) von der hinteren Längsstrebe (11) abnehmbar zu gestalten. Zur Erhöhung der Stabilität der erfindungsgemäßen Vorrichtung, insbesondere zur Abstützung der rückwärtigen Arbeitsplattform (40), wird in diesem Falle mindestens eine von den rückwärtigen Füßen (30) schräg nach oben zu der rückwärtigen Längsstrebe (5) verlaufende Querstrebe (4) vorgesehen.

Gitter- oder plattenförmige Trittflächen sind auch zwischen den vorderen und rückwärtigen horizontalen Längsstreben der vorderen Arbeitsplattform (80, 90) sowie im Bereich des Aufgangs (70) angebracht.

Eine weitere Besonderheit der erfindungsgemäßen Vorrichtung besteht darin, daß sie gegebenenfalls mindestens eine, vorzugsweise jedoch vier Hubeinheiten (3) aufweist, die ein Anheben des auf dem Rahmen abgesetzten Fahrzeugs erlauben. Werden die vier Hubeinheiten (3) gleichzeitig und synchron betätigt, wird das Fahrzeug horizontal angehoben. Im angehobenen Zustand können beispielsweise die Räder leicht demontiert und die Stoßdämpfer ausgebaut oder nach einem Anbohren an geeigneter Stelle entleert werden. Durch asynchrone Steuerung der Hubmittel (3) kann das abgesetzte Fahrzeug um seine Längs- und Querachse gedreht werden. Hierdurch wird es möglich, Flüssigkeitsmengen, die ohne diese Neigung im Fahrzeug verbleiben würden, "auszugießen".
Die Hubmittel (3) können beispielsweise auf der Oberfläche der Längs-und/oder Querstreben oder zumindest teilweise in diesen versenkt angeordnet sein. In beiden Fällen sind sie vorzugsweise auf Schlitten montiert, die in Längs- und/oder Querrichtung verschiebbar sind. Vorzugsweise können die Hubmittel so ausgerichtet werden, daß sie im Schwellerbereich eines aufgesetzten Fahrzeugs angreifen. Bei besonders schmalen Fahrzeugen oder einer großen Breite des Rahmens ist es ohne weiteres möglich, die beiden gegenüberliegenden, auf unterschiedlichen Längsstreben (10, 11) befindlichen Hubmittel (3) durch einen unter dem Fahrzeug verlaufenden Balken zu verbinden. Durch gleichzeitige Betätigung der über die Balken verbundenen Hubmittel kann so das Fahrzeug angehoben beziehungsweise zur Verbesserung des Flüssigkeitsablaufs zur Seite geneigt werden.
Grundsätzlich kann das Hubmittel auf beliebige Weise angetrieben werden. Wegen der Funkenbildung von Elektromotoren sind jedoch hydraulisch oder pneumatisch betriebene Hubzylinder bevorzugt.
Hubmittel (3) können anstelle der oder zusätzlich zu den auf den Längsachsen (10, 11) vorgesehenen Hubmitteln auch auf den Querstreben (20, 27; 28, 26) angebracht sein. Selbst in diesem Fall kann das Anheben eines Fahrzeugs durch Balken bewerkstelligt werden, die über dem inneren Arbeitsbereich unterhalb des Fahrzeugs von einem Hubmittel zum anderen verlaufen.

Von besonderer Bedeutung für die erfindungsgemäße Vorrichtung ist ferner, daß sie gegebenenfalls mindestens ein Flüssigkeitsauffangmodul und/oder mindestens ein Absaugmodul aufweist, das es erlaubt, ein Flüssigkeitsauffangmittel (74) oder einen Anschluß einer Absaugeinrichtung ohne Kraftanstrengung und Einschränkung der Bewegungsfreiheit an jedem beliebigen Ort im inneren Arbeitsbereich zu positionieren.

Bei den hier und nachfolgend mit dem Suffix "Modul" versehenen Einrichtungen handelt es sich um gegeneinander austauschbare Teile der erfindungsgemäßen Vorrichtung.

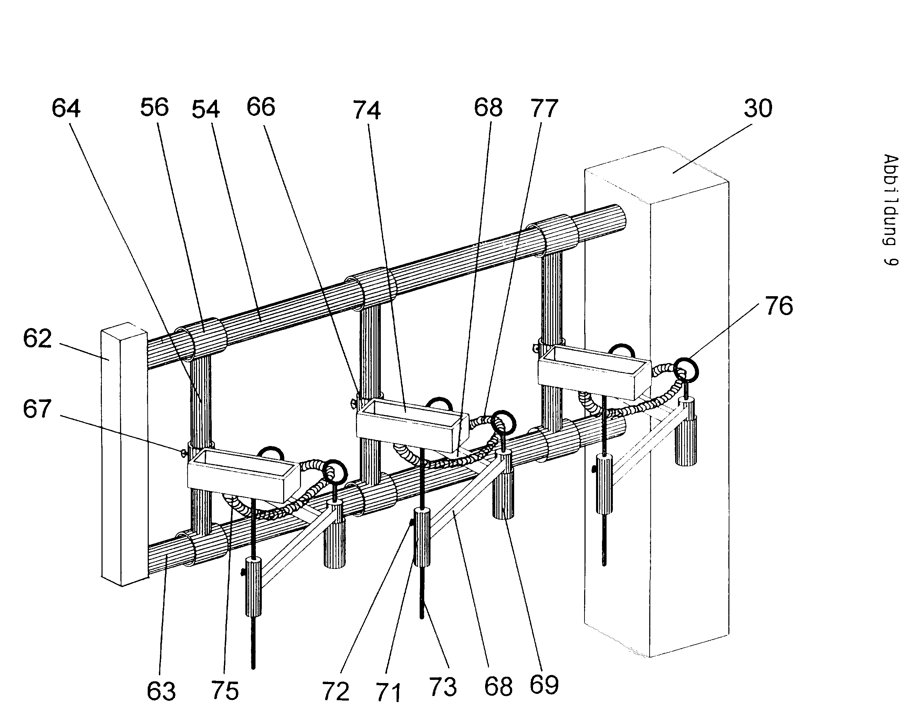

In einer besonders bevorzugten Ausführungsform zeigt ein Flüssigkeitsauffang- oder Absaugmodul beispielsweise den in Abbildung 9 dargestellten Aufbau:

Ein derartiges Modul besteht zunächst aus einem bei seitlicher Betrachtung einem um 90° gedrehtem "U" entsprechenden Verschieberahmen. Dieser umfaßt eine senkrechte Strebe (62), eine untere horizontale Führungsschiene (63) und eine oberhalb dieser gegenüberliegend verlaufende, hierzu parallele, obere Führungsschiene (54). Die horizontalen, freien Schenkel des U-förmigen Verschieberahmens sind, starr oder seitlich schwenkbar, übereinander liegend an einem der Füße (30) angebracht. Das obere Ende des senkrechten Bereichs (62) steht vorzugsweise nur mit der oberen horizontalen Führungsschiene (54) in Verbindung und ist ansonsten frei. Aus Stabilitätsgründen kann es gegebenenfalls starr an der Unterseite eines Endes einer Längsstrebe (10, 11) oder einer horizontalen Querstrebe (20, 27; 28, 26) befestigt sein. In diesem Falle scheidet eine Schwenkmöglichkeit des einem liegendem "U" entsprechenden Verschieberahmens um den Fuß (30) aus.
Zwischen der oberen Führungsschiene (54) und der unteren Führungsschiene (63) ist mindestens eine senkrechte Verschiebestange (64) angeordnet. Die Verschiebestange weist an ihrem Ende beispielsweise horizontal ausgerichtete Führungsrohre (56) auf, die die obere Führungsschiene (54) und die untere Führungsschiene (63) lose umfassen. Auf diese Weise kann die senkrechte Verschiebestange (64) entlang der oberen und der unteren Führungsschienen (54, 63) gleitend oder gegebenenfalls rollend seitlich verschoben werden.
Die senkrechte Verschiebestange (64) wird von mindestens einem senkrecht ausgerichteten Führungsrohr (66) umfaßt. An diesem ist mindestens ein horizontaler Arm (68) angebracht. Vorzugsweise trägt das senkrechte Führungsrohr (66) zwei horizontale Arme (68), die über ein Gelenk (69) miteinander verbunden sind. Das freie Ende des Arms (68) trägt ein senkrecht ausgerichtetes Führungsrohr (71), in dem eine Verschiebestange (73) senkrecht verläuft. An dem oberen Ende der senkrechten Verschiebestange (73) befindet sich ein zum Beispiel trichter- oder wannenförmiges Flüssigkeitsauffangmittel (74).
Zur Erreichung eines im wesentlichen geschlossenen Systems weisen die oberen Ränder der Flüssigkeitsauffangmittel (74) mindestens eine umlaufende, wulst- und/oder lippenförmige Manschette aus beständigem, elastischem Kunstoffmaterial auf. Wird das Flüssigkeitsauffangmittel (74) richtig positioniert, so schmiegt sich diese Manschette der Fahrzeugunterseite an und verhindert eine Freisetzung von Dämpfen. Für den Fall, daß eine gasdichte Verbindung zwischen der umlaufenden Manschette und der Fahrzeugunterseite aufgrund geometrischer Gegebenheiten nicht zustande kommen kann, wird im oberen Wandbereich des Flüssigkeitsauffangmittels (74) eine Öffnung vorgesehen, die über einen Schlauch (77) mit einer Einrichtung zur Erzeugung von Unterdruck in Verbindung steht. Auf diese Weise kann wirksam verhindert werden, daß beim Auffangen von Flüssigkeiten mit der erfindungsgemäßen Vorrichtung Dämpfe freigesetzt werden. Anstelle des trichter- oder wannenförmigen Flüssigkeitsauffangmittels (74) oder zusätzlich zu diesem kann selbstverständlich ein saugrüsselartiger Anschluß einer Absaugeinrichtung vorgesehen werden.
Das Flüssigkeitsauffangmittel (74) oder der Anschluß einer saugrüsselartigen Absaugeinrichtung sind über die senkrechten Führungsrohre (66, 71) vertikal verschiebbar angebracht. Zur Arretierung der durch diese Führungsrohre senkrecht verlaufenden Verschiebestangen (64, 73) weisen die Führungsrohre (66, 71) Stellschrauben (67, 72) auf. Eine seitliche Verschiebbarkeit des Flüssigkeitsauffangmittels (74) oder des Anschlußes einer Absaugeinrichtung wird durch das auch seitlich drehbare, senkrechte Führungsrohr (66) und das Gelenk (69) bewirkt.
Die gewonnene Flüssigkeit und/oder die Dämpfe werden vorzugsweise über ein Schlauchsystem (77) abgeführt. Der Verlauf des Schlauchs (77) ist unter Einsatz von Schlauchführungen (76) vorzugsweise so gewählt, daß er ausgehend von einem Schlauchanschluß (75) dem Arm (68) entlang auf kürzestem Weg in einen Fuß (30), eine Längsstrebe (10, 11) oder in eine Querstrebe (20, 27; 28, 26) führt. Von dort verläuft er gegebenenfalls unterirdisch zu einem tankartigen Behälter, der in einem den gesetzlichen Auflagen entsprechenden, separaten Raum vorgesehen ist. Kommt eine Absaugeinrichtung zum Einsatz, so wird beispielsweise außerhalb des Raums, in dem die Demontage- Vorrichtung steht, eine Einrichtung vorgesehen, die den Schlauch (77) mit Unterdruck versorgt. Die abgesaugten Dämpfe werden nach der Passage einer Rückgewinnungseinrichtung und/oder eines Filters an die Umluft abgegeben.
Vorzugsweise werden die Schläuche (77) so verlegt, daß Schläuche, die gleiche Flüssigkeiten führen, in gleiche Behälter münden. In dem separaten Behälter - Aufbewahrungsraum befinden sich beispielsweise Einzelbehälter für Benzin, Dieselkraftstoff, Motoröl, Getriebeöl, Lenkhilfeöl, Stoßdämpferöl, Bremsflüssigkeit, Kühlflüssigkeit, Kühlmittel von Klimaanlagen und Scheibenwaschflüssigkeit.

Eine derartige Ausführungsform der erfindungsgemäßen Vorrichtung mit einem Flüssigkeits- beziehungsweise Absaugmodul weist die Vorteile auf, daß weder im Bodenbereich hängende Schläuche noch am Boden abgestellte Flüssigkeitsauffangbehälter die Bewegungsfreiheit im Fußbereich einschränken. Auch im Kopfbereich kommt es zu keinen Behinderungen, da diejenigen Flüssigkeitsauffangmittel (74), die nicht im Einsatz sind, voll zur Seite geschwenkt werden können.
Eine enorme Steigerung der Bewegungsfreiheit im Kopfbereich kann dadurch erreicht werden, daß die obere horizontale Führungsschiene (54) und die untere horizontale Führungsschiene (63) über arretierbare Drehgelenke seitlich schwenkbar mit einem Fuß (30) verbunden sind. Wenn nach der Trockenlegung Ausbauarbeiten an der Unterseite des Fahrzeugs anstehen, kann der U-förmige Verschieberahmen zusammen mit den Armen (68) und den Flüssigkeitsauffangmitteln (74) vollständig aus dem inneren Arbeitsbereich geschwenkt werden.

In einer besonders bevorzugten Ausführungsform der erfindungsgemäßen Vorrichtung ist anstelle von oder zusätzlich zu einem Flüssigkeitsauffangmodul beziehungsweise Flüssigkeitsabsaugmodul ein Tankentleerungsmodul vorgesehen.
Bei diesem Tankentleerungsmodul wird die eigentliche Tankentleerungseinrichtung (45) auf einer Verschiebeeinrichtung angeordnet, die es erlaubt, die Tankentleerungseinrichtung horizontal und vertikal exakt unterhalb des Tanks zu plazieren.

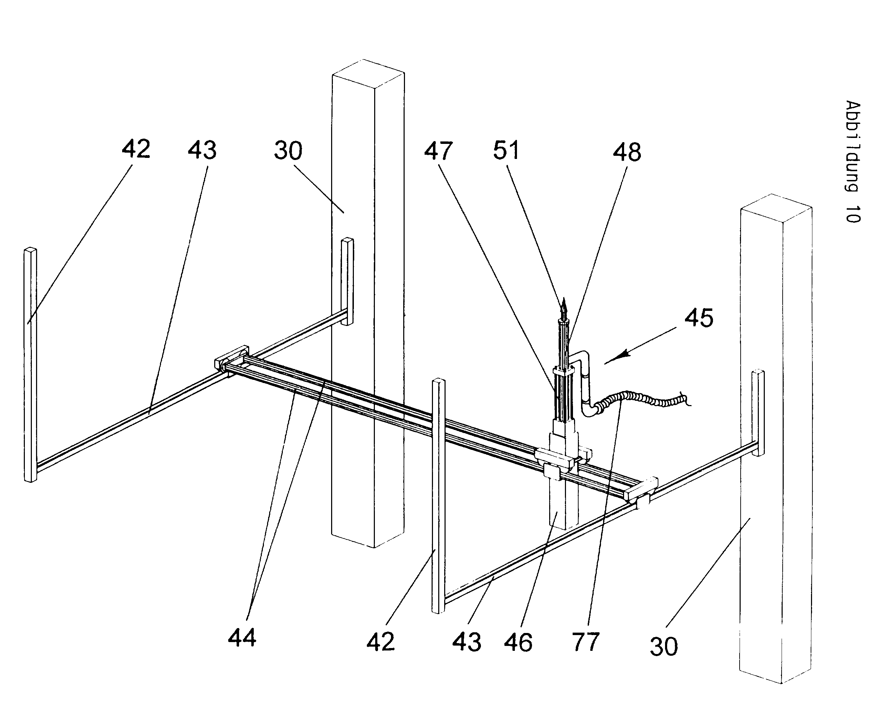

Ein beispielhafter Aufbau eines Tankentleerungsmoduls wird in Abbildung 10 gezeigt.

Die Verschiebeeinrichtung umfaßt dort zwei horizontale Führungsschienen (43) gleicher Länge. Sie sind einander parallel auf gleicher Höhe gegenüberliegend und parallel zu den Längsstreben (10, 11) an zwei benachbarten Füßen (30) angebracht. Das freie Ende der horizontalen Führungsschienen (43) kann zur Erhöhung der Stabilität des Tankentleerungsmoduls über eine senkrechte Strebe (42) mit den Längsstreben (10, 11) des Rahmens in Verbindung stehen. Auf den horizontalen Führungsschienen (43) laufen gleitend oder rollend zwei zueinander parallele, dicht beabstandete horizontale Verschiebestangen (44). Sie sind rechtwinklig zu den horizontalen Führungsschienen (43) angeordnet und starr miteinander verbunden. Auf einem verschiebbaren Schlitten, der auf den beiden dicht beabstandeten Verschiebestangen (44) gleitend oder rollend aufliegt, sind eine Hubeinrichtung (46) und darauf eine Tankentleerungseinrichtung (45) vorgesehen. Mit Hilfe dieses Verschieberahmens kann die Tankentleerungseinrichtung (45) beliebig in Richtung der x- und y- Achsen verschoben und exakt unter einem Tank positioniert werden. Zur Verschiebung der Tankentleerungseinrichtung (45) in Richtung der z-Achse dient die Hubeinrichtung (46), die elektrisch, hydraulisch oder pneumatisch betrieben wird. Vorzugsweise verfügt sie zur Vermeidung jeder Funkenbildung über einen pneumatischen Antrieb.

Die Tankentleerungseinrichtung (45) besitzt ein Antriebsmittel (47). In einer besonders bevorzugten Ausführungsform weist das Antriebsmittel (47) eine nach oben gerichtete, rotativ angetriebene Welle auf, die eine Bohrerspitze (51) trägt. Mit ihrer Hilfe kann insbesondere ein Blechtank von unten geöffnet, das Bohrloch ausgefräst und der Tankinhalt größtenteils abgelassen werden.
Bohrt man jedoch einen heute üblichen Kunststofftank an, so entstehen Späne, die in dem Treibstoffauffangmittel (48) die Auslaßöffnung oder den Schlauch (77), beziehungsweise die Pumpe, verlegen können.
Zur Vermeidung von Problemen verursachenden Bohrspänen verwendet man anstelle eines rotativ angetriebenen Bohrers (51) vorzugsweise einen spitzen, senkrecht nach oben gerichteten Anstoßdorn, der auf einer Welle des vertikal bewegbaren Antriebsmittels (47) vorgesehen ist.
Von besonderem Vorteil ist es, die Welle der Antriebseinheit (47) mit einem Spannfutter zur Aufnahme des Schaftes der Bohrerspitze (51) und des Anstoßdorns auszugestalten, sodaß diese gegeneinander ausgetauscht werden können.
Die nach oben gerichtete Bewegung des Anstoßdorns erfolgt vorzugsweise durch die Hubeinrichtung (46). Sie kann aber selbstverständlich auch durch einen Exzenterhebel oder eine Gasdruckfeder bewirkt werden.
Nach dem Anbohren oder Anstoßen des Tanks werden die durch den Bohr-oder Anstoßvorgang nach oben gebogenen Ränder des Bohrlochs trichterförmig nach unten gebogen, sodaß der im Tank enthaltene Treibstoff vollständig abfließen kann. Dies wird beispielsweise dadurch bewerkstelligt, daß mit Hilfe der Tankentleerungseinrichtung (45) eine Vielzahl von federnden, kreisförmig angeordneten, durch einen Federring zusammengehaltenen Haken in das Bohrloch eingeführt wird. Löst man den Federring etwas, so greifen die federnd nach außen gerichteten Haken in die nach oben gerichteten Ränder des Bohrlochs ein. Das kreisförmige Ensemble von Haken wird nun nach unten gezogen, wodurch die Ränder des Bohrlochs und teilweise auch der Tankboden nach unten gebogen werden.
Der durch das Bohrloch abfließende Kraftstoff wird von einem im wesentlichen ringförmigen Auffanggefäß (48) gesammelt und über einen Schlauch (77) einem entsprechenden Behälter zugeführt.
Vorzugsweise liegt die Tankentleerungseinrichtung (45) in Form eines geschlossenen Systems vor. Dies bedeutet, daß am oberen Rand des ringförmigen Auffanggefäßes (48) mindestens eine lippen und/oder wulstförmige Manschette ausgebildet ist, die sich bei einem entsprechenden Anpreßdruck gasdicht an den Boden des Tanks schmiegt. Wie im Falle des Flüssigkeitsauffangmittels (74) kann im oberen Wandbereich des Auffanggefäßes (48) eine zusätzliche Öffnung für den Anschluß einer Dampfabsaugeinrichtung vorgesehen werden.
Der Vorteil einer derartigen Ausführungsform der erfindungsgemäßen Vorrichtung mit einem Tankentleerungsmodul liegt darin, daß durch das Öffnen des Tanks von unten der Treibstoff nahezu vollständig aus dem Tank abfließen kann. Dies ist bei einer Absaugung des Treibstoffs durch den Tankstutzen nicht möglich. Durch die Heranführung des ringförmigen Auffangmittels (48) unmittelbar an die Bohröffnung im Tank muß der ablaufende Treibstoff keine lange Fallstrecke zu einem wannenartigen Auffangbehältnis zurücklegen. Auf diese Weise wird weitgehend vermieden, daß Kraftstoffdämpfe während der Treibstoffentnahme freigesetzt werden. Hierdurch wird einerseits jede gesundheitliche Belastung von den Benutzern ferngehalten. Andererseits kann die Bildung explosionsfähiger Gasgemische durch diese Maßnahme wirksam unterdrückt werden.

In einer besonders bevorzugten Ausführungsform ist bei frontaler Betrachtung an einem seitlichen Paar der Füße (30) (zum Beispiel links vome und links hinten) ein Tankentleerungsmodul angebracht. An den auf der gegenüberliegenden Seite befindlichen beiden Füßen (30) (zum Beispiel rechts vorne und rechts hinten) sind dann jeweils ein Flüssigkeitsauffangmodul und/oder ein Flüssigkeitsabsaugmodul vorgesehen.

Wie bereits ausgeführt, können bei der Entnahme von Flüssigkeiten aus einem Fahrzeug grundsätzlich Flüssigkeitsdämpfe freigesetzt werden. Dies ist insbesondere dann der Fall, wenn anstelle eines Flüssigkeitsabsaugmoduls ein Flüssigkeitsauffangmodul ohne Dampfabsaugung zur Anwendung kommt, oder, wenn auf ein geschlossenes Tankentleerungsmodul zugunsten eines offenen Treibstoffauffangmoduls ohne Dampfabsaugung verzichtet wird. Da die freigesetzten Dämpfe schwerer als Luft sind, fallen sie nach unten und füllen langsam ansteigend den Raum, in dem die erfindungsgemäße Vorrichtung aufgestellt ist. Zur Entfemung dieser gesundheitsschädlichen Dämpfe und eines möglicherweise explosionsfähigen Gasgemisches wird vorzugsweise eine Bodenabsauganlage vorgesehen. Deren Ansaugspalt erstreckt sich insbesondere in unmittelbarer Bodennähe rückwärtig und parallel zur rückwärtigen Längsstrebe (5) über die gesamte Länge der Vorrichtung.

Zur Erhöhung des Wirkungsgrades der Bodenabsauganlage ist der Boden unterhalb der erfindungsgemäßen Vorrichtung vorzugsweise in Richtung des länglichen Ansaugspaltes der Bodenabsauganlage geneigt. Die Neigung des Bodens liegt im Bereich von 0,001° bis 10°. Aufgrund der Neigung des Bodens fließen die schweren Flüssigkeitsdämpfe schnell und vollständig dem Öffnungsspalt der Bodenabsauganlage zu. Es bleibt ihnen keine Zeit, sich mit der die erfindungsgemäße Vorrichtung umgebenden Luft zu vermischen und diese dadurch zu verunreinigen.

Gesetzliche Auflagen schreiben vor, daß die Trockenlegung von Fahrzeugen nur über öldichten Arbeitsflächen mit Ölabscheider durchgeführt werden darf. Die öldichte Ausgestaltung des unterhalb der großen Arbeitsfläche der erfindungsgemäßen Vorrichtung liegenden Bodens ist sehr aufwendig und kostenintensiv. Dies ist insbesondere dann der Fall, wenn der Boden zusätzlich die angesprochene Neigung in Richtung des Ansaugspalts einer Bodenabsauganlage aufweist. Zur Vermeidung eines erheblichen Investitionsaufwandes umfaßt die erfindungsgemäße Vorrichtung gegebenenfalls eine kostengünstig herzustellende Metallwanne (84). Sie erstreckt sich im wesentlichen unterhalb einer Fläche, die bei Betrachtung von oben durch den äußeren Umfang der erfindungsgemäßen Vorrichtung mit angeschwenkten, vorderen Arbeitsplattformen (80, 90) begrenzt wird. Um die Anfahrt eines Gabelstaplers bis unmittelbar zur vorderen Längsstrebe (10) zu ermöglichen, kann im vorderen Bereich der Wanne (84) eine im wesentlichen rechteckige Aussparung vorgesehen werden. Die Wanne (84) umfaßt einen Wannenboden (86) und seitliche, im wesentlichen senkrecht hochgezogene Wandungen (87). Durch die Höhe der Wandungen (87) kann das Auffangvolumen der Wanne auf beliebige Werte eingestellt werden. Dies bietet hinsichtlich zukünftiger gesetzlicher Auflagen wertvollen Spielraum.
Zur einfachen und sicheren Überprüfung der Dichtigkeit der Wanne (84) wird diese auf im wesentlichen stab- oder rohrförmigen Abstandshaltern (85) vom Boden (92) beabstandet gelagert. Die Abstandshalter (85) sind parallel zueinander angeordnet. Mit Hilfe einer Taschenlampe kann die Bodenfläche zwischen den Abstandshaltern mühelos ausgeleuchtet und sicher auf das Vorhandensein von Ölflecken geprüft werden.
Durch eine der Höhe nach gestaffelte Anordung von Abstandshaltern (85) oder durch deren angeschrägte Ausbildung ist es zu kostengünstigen Konditionen möglich, der Wanne (84) die oben bereits beschriebene Neigung in Richtung des Ansaugspalts der Bodenabsauganlage zu verleihen.
Die Füße (30) können in der Wanne (84) aufstehen. In diesem Falle ist die Wanne (84) im Bereich der Auflage der Füße (30) zur Vermeidung ihrer Verformung beziehungsweise Beschädigung wirkungsvoll zu unterlegen. Einem seitlichen Verrutschen der Füße (30) kann durch die Anbringung von seitlichen, beispielsweise leistenförmigen Arretierungsmitteln auf dem Wannenboden entgegengewirkt werden. Ein Kippen des Gestells der erfindungsgemäßen Vorrichtung kann beispielsweise dadurch verhindert werden, daß man im unteren Bereich des Fußes (30) eine horizontale Nut anbringt, in die ein Vorsprung eines Arretierungsmittels eingreift, das am Wannenboden angebracht ist. Ein leistenförmiges Arretierungsmittel mit einem Querschnitt, der bei seitlicher Betrachtung einem um 90 ° gedrehten "L" entspricht, könnte beispielsweise als Arretierungsmittel gegen ein seitliches Verschieben und gegen ein Kippen dienen. Zusätzlich sollte in diesem Fall die Wanne (84) selbst beispielsweise mit Hilfe von an ihrer Außenseite vorgesehenen Laschen fest am Boden (92) verankert werden.

Diese Ausführungen gelten sinngemäß für Ausführungsformen, bei denen der in der Wanne aufstehende Fuß (30) nach unten beispielsweise durch ein senkrechtes Sockelelement (89) abgeschlossen wird.

Vorzugsweise stehen die Füße (30) beziehungsweise die zugehörigen senkrechten Sockelelemente (89) jedoch nicht in der Wanne (84) auf, sondern werden durch diese hindurchgeführt und am Boden (92) befestigt. Zu diesem Zweck weist die Wanne (84) in der Draufsicht im wesentlichen rechteckige, an den Querschnitt der Füße (30) und/oder der senkrechten Sockelelemente (89) angepaßte Aussparungen (88) auf, deren Anzahl der Zahl der Füße (30) entspricht. Die Aussparungen (88) sind von seitlich hochgezogenen Wandungen (87) umgeben. In einer besonders bevorzugten Ausführungsform liegt der Wannenboden (86) auf der horizontalen Sockelplatte (91) auf. Zumindest etwas vertikal beabstandet vom Wannenboden (86) ist eine begehbare, gitterförmige Abdeckung (93) vorgesehen, die von Auflagen (94) abgestüzt wird.
Vorzugsweise wird zur Verringerung einer Stolpergefahr um den äußeren Umfang der Wanne eine rampenförmige Umrandung (95) gelegt. Sie umfaßt eine am Boden (92) aufliegende Flanke, an deren oberem Ende ein senkrecht nach unten weisender, hakenförmiger Vorsprung angebracht ist. Dieser greift in die senkrechte, seitlich hochgezogene Wandung (87) der Wanne (84) ein, wodurch eine kraftschlüssige Verbindung zwischen der Umrandung (95) und der Wanne (84) erreicht wird. Ein weiterer Vorteil dieser Umrandung (95) liegt darin, daß sie durch ein einfaches senkrechtes Anheben schnell aus ihrer Verankerung gelöst und entfemt werden kann. Im Falle einer Prüfung der Wanne auf Dichtigkeit kann so in kürzester Zeit Zugang zu dem unter der Wanne befindlichen Boden verschafft werden.

Zur Verhinderung des Eindringens von Flüssigkeiten in den Spalt zwischen dem hochgezogenen Rand der Aussparung (88) und dem senkrechten Sockelelement (89) beziehungsweise dem Fuß (30), kann eine den unteren Teil des Fußes (30) umschließende Manschette (96) vorgesehen werden. Sie umfaßt in der Regel einen oberen und einen unteren Bereich. Bei Betrachtung von oben ist der Querschnitt des oberen Bereichs der Manschette (96) nur geringfügig größer als der Querschnitt des Fußes (30).

Der untere Bereich weitet sich dagegen mindestens soweit auf, daß er den angesprochenen Spalt überragt. Das untere Ende der Manschette (96) sitzt auf dem Gitter (93) auf und erlaubt eine vertikale Verschiebung des Fußes (30). Wenn der Fuß (30) wie in Abbildung 11 mittels eines senkrechten Sockelelements (89) höhenverstellbar ausgebildet ist, weist die Manschette (96) Bohrungen (100) auf, die mit den Bohrungen (101) dieses Sockelelements (89) fluchten. Diese Bohrungen (100) dienen zur Durchführung des Verriegelungsstiftes (98).

Um zu verhindern, daß eine unmittelbar auf der Oberfläche des Fußes (30) ablaufende Flüssigkeit die Manschette unterläuft, ist auf dem Fuß (30) zum Beispiel ein umlaufender Kragen ausgebildet, dessen oberer Bereich am Fuß (30) dichtend anliegt, während sein unterer Bereich aufgeweitet und soweit von dem Fuß beabstandet ist, daß er den Spalt zwischen dem Fuß (30) und der Manschette (96) überragt.

Vorzugsweise ist an mindestens einer Arbeitsplattform (40, 50, 60, 80, 90) mindestens eine galgenartige Einrichtung (39) vorgesehen. In der Regel befinden sich zwei galgenartige Einrichtungen (39) zumindest an den beiden gegenüberliegenden seitlichen Arbeitsplattformen (50, 60). Die galgenartige Einrichtung kann starr oder um ihre Hochachse schwenkbar und die jeweilige Arbeitsplattform in Richtung des inneren Arbeitsbereichs überragend, insbesondere im Bereich des Geländers, angebracht sein. An dieser galgenartigen Einrichtung (39) und/oder den Füßen (30) und/oder den Längsstreben (10, 11) und/oder den Querstreben (20, 27; 28, 26) können unmittelbar Versorgungsleitungen angebracht sein für pneumatisch, hydraulisch oder elektrisch betriebene Gerätschaften. Hierunter fallen insbesondere Scheren, Trennschleifer, Schlagschrauber, Schraubenzieher und Bohrgeräte.
Vorzugsweise ist an dem in der Regel schwenkbar ausgebildeten Galgen (39) auch eine Hubeinrichtung, wie zum Beispiel eine Seilwinde, angebracht, die ein Herausheben, zum Beispiel der Batterie oder des trockengelegten Motorblocks, aus dem Motorraum erlaubt.
An den genannten Stellen, insbesondere aber an der galgenartigen Einrichtung (39) können mehrere unter Unterdruck stehende Schläuche bereit gehalten werden, die mit jeweils unterschiedlichen
Flüssigkeitssammelbehältern verbunden sind. Auf diese Weise sind Flüssigkeiten im Kühler- oder Kofferraumbereich mühelos abzusaugen. Vorzugsweise wird an der galgenartigen Einrichtung (39) auch mindestens eine Druckluftleitung bereitgestellt. Mit ihrer Hilfe kann beispielsweise eine an der Fahrzeugunterseite angesetzte Flüssigkeitsansaugeinrichtung wirkungsvoll unterstützt und die Dauer einer Trockenlegung verkürzt werden. Femer ist es sinnvoll, an der galgenartigen Einrichtung (39) einen Schlauch vorzusehen, dem eine zum Beispiel tensidhaltige Spülflüssigkeit entnommen werden kann. Der Einsatz einer tensidhaltigen Spülflüssigkeit ermöglicht eine vollständige Entfernung von nicht ablaufenden oder absaugbaren Ölresten, die insbesondere im Motorblock ein nicht vernachlässigbares Volumen einnehmen.

An den Füßen (30) sowie an den Geländern sind ferner starr oder über mindestens ein Gelenk schwenkbar befestigte Werkzeugablagen vorgesehen.

Im nachfolgenden wird beispielhaft ein Verfahren zur Demontage von Fahrzeugen, insbesondere zu deren Trockenlegung, unter Verwendung der erfindungsgemäßen Vorrichtung beschrieben.

Die Reihenfolge der eigentlichen Trockenlegungsmaßnahmen ist willkürlich gewählt und kann beliebig geändert werden.

Stellvertretend für alle Ausführungsformen der erfindungsgemäßen Vorrichtung wird die Verwendung einer Ausführungsform mit zwei schwenkbaren, vorderen Arbeitsplattformen (80, 90) und einem bei frontaler Betrachtung auf der linken Seite befindlichen Tankentleerungsmodul und einem Flüssigkeitsauffangmodul auf der rechten Seite beschrieben.

Der Motor des trockenzulegenden Fahrzeugs befindet sich in dessen vorderen Bereich, der Tank dagegen im Heck.

Zunächst werden die schwenkbaren vorderen Arbeitsplattformen (80, 90) soweit wie möglich zur Seite geschwenkt.
(Ist die vordere Arbeitsplattform an der vorderen Längsstrebe (10) starr befestigt, so werden zu Beginn des Verfahrens die einzelnen Gitterteile voneinander entriegelt und nach unten oder zur Seite geschwenkt).

Anschließend nimmt ein Gabelstapler ein Fahrzeug von der Seite auf seine Gabel auf. Ob das Heck des Fahrzeugs beim Aufladen auf die Gabel und beim Absetzen auf die erfindungsgemäße Vorrichtung nach links oder rechts weist, hängt von dem Anbringungsort des Tanks ab. Befindet sich, wie im vorliegenden Fall, das Tankentleerungsmodul auf der linken Seite der erfindungsgemäßen Vorrichtung, sollte ein Fahrzeug, dessen Tank im Heckbereich untergebracht ist, so aufgenommen und auf der erfindungsgemäßen Vorrichtung abgesetzt werden, daß sein Heck nach links weist. Denn nur in diesem Fall kommt der Tank über dem Tankentleerungsmodul zu liegen. Fahrzeuge mit Heckantrieb, deren Tank in der Regel im vorderen Abschnitt sitzt, werden dagegen vorzugsweise so aufgenommen und auf der hier beschriebenen erfindungsgemäßen Vorrichtung abgesetzt, daß ihr Heck nach rechts zeigt.
Im vorliegenden Fall sollte die Rückseite des Fahrzeugs links und die Vorderseite des Fahrzeugs rechts über die Gabel ragen.
Der Gabelstapler hebt dann das Fahrzeug auf eine Höhe an, die knapp über der des Abstreifmittels (6, 7) liegt und fährt mittig unter Verwendung der Abstreifmittel als Anpeilhilfen bis zur vorderen Längsstrebe (10) vor. Dort angekommen, verringert er die Höhe der Gabel und setzt das Fahrzeug vollständig oder zumindest teilweise so auf dem Rahmen der erfindungsgemäßen Vorrichtung beziehungsweise auf dessen Verbreiterungen ab, daß die Vorderräder zwischen den beiden rechten schwellenförmigen Mitteln (8, 9) zur automatischen Ausrichtung eines Fahrzeugs in dessen Längsrichtung zu liegen kommen.
Der Tank des Fahrzeugs befindet sich dabei über dem auf der linken Seite befindlichen Tankentleerungsmodul.
Beim Zurückfahren des Gabelstaplers verhindern die Abstreifmittel (6, 7), die an dem rechten Vorderrad und dem rechten Hinterrad des Fahrzeugs angreifen, daß das Fahrzeug an der Gabel des Gabelstaplers "hängenbleibt" und richten das Fahrzeug parallel zu den Längsstreben (10, 11) aus. Es ist selbstverständlich, daß anstelle eines Gabelstaplers auch ein Kran oder eine Laufkatze zum Anheben und Positionieren des Fahrzeugs verwendet werden können.
Daraufhin werden, falls vorhanden, die vorderen Arbeitsplattformen (80, 90) angeschwenkt und verriegelt. Sind die vorderen Arbeitsplattformen starr an der vorderen Längsstrebe (10) angebracht, werden ihre Geländer (14, 15) aufgerichtet.
Nach dem Anschließen einer Masseklemme zum Potentialausgleich an einem Fahrzeugteil mit guter Masse wird das Tankentleerungsmodul exakt horizontal und vertikal ausgerichtet. Mit Hilfe des spitzkegeligen Bohrers (51) bohrt man den Tank an und fräst das Bohrloch zumindest etwas aus. Unter Verwendung der hakenförmigen Einrichtung wird der ursprünglich nach oben gerichtete Bohrlochrand nach unten gebogen. Der austretende oder abgesaugte Treibstoff wird aufgefangen und je nach Art des Treibstoffs über Schläuche (77) einem separaten Behälter zugeführt.
Nach vollständiger Entleerung des Tanks wird die Tankbohreinrichtung wieder abgesenkt und mittels des Verschieberahmens aus dem inneren Arbeitsbereich geschoben.
Unter Verwendung von vorzugsweise pneumatisch oder hydraulisch betriebenen Gerätschaften, insbesondere einer Schere, kann nun der Tank ausgebaut werden.
Zwischenzeitlich können die Hubzylinder (3) in den Schwellerbereichen positioniert und hochgefahren werden, bis die Räder frei sind. Mit Hilfe von vorzugsweise pneumatisch betriebenen Schlagschraubern lassen sich in kürzester Zeit sämtliche Räder entfemen.
Nach dem Entfemen der Räder können beispielsweise die Stoßdämpfer angebohrt und die austretenden Flüssigkeiten über Auffangwannen, die im Randbereich auf den oberen Arbeitsplattformen vorgesehen sind, aufgefangen und über Schläuche (77) einem Sammelbehälter in einem separaten Raum zugeleitet werden. Selbstverständlich kann die Stoßdämpferflüssigkeit auch über auf der oberen Arbeitsplattform vorgesehene Absaugeinrichtungen den Stoßdämpfem entnommen werden. Gegebenenfalls können daraufhin die Stoßdämpfer ausgebaut und ganz, oder in ihre Bestandteile zerlegt, einem Recycling-Verfahren zugeführt werden.
Nach dem Entfernen der Räder und der Trockenlegung und/oder dem Ausbau der Stoßdämpfer werden die Hubzylinder wieder abgesenkt. Man bringt nun die wannen- oder trichterförmigen Flüssigkeitsauffangmittel (74) des linken und rechten Flüssigkeitsauffangmoduls unter die entsprechenden Flüssigkeitsauslaßöffnungen des Fahrzeugs und öffnet diese. Auf diese Weise können insbesondere Motor- , Getriebe- und Lenkhilfeöle, die Bremsflüssigkeit und die Kühlflüssigkeit entleert werden. Anstelle der wannen- oder trichterförmigen Flüssigkeitsauffangmittel (74) können auch auf die jeweilige Flüssigkeitsaustrittsöffnung passende Absaugeinrichtungen zur Anwendung kommen.
Zugleich können von oben, zum Beispiel im Motorraum, mit Hilfe einer an dem Galgen (39) vorgesehenen schlauchförmigen Absaugeinrichtung Flüssigkeiten entnommen werden. Insbesondere kommen hierfür die Scheibenwaschflüssigkeit und das Kältemittel einer Klimaanlage in Betracht.

Nach dem Trockenlegen des Fahrzeugs werden die vorderen Arbeitsplattformen (80, 90) entriegelt und wieder zur Seite geschwenkt. (Bei feststehender vorderer Arbeitsplattform entriegelt man wieder die Geländerteile und legt sie um).
Daraufhin wird das trockengelegte und teilweise demontierte Fahrzeug mit Hilfe eines Gabelstaplers oder Krans von der erfindungsgemäßen Vorrichtung abgenommen und weiteren Demontagearbeiten zugeführt.

Es ist selbstverständlich, daß unter Verwendung der erfindungsgemäßen Vorrichtung während der Trockenlegung zahlreiche weitere Demontagearbeiten vorgenommen werden können. Beispielsweise können die Türen oder Kotflügel, der Kofferraumdeckel und die Motorhaube sowie die Scheiben in dieser Zeit ausgebaut und jeweils separaten Behältnissen zugeführt werden.

Abschließend wird festgestellt, daß diejenigen Flüssigkeitsentnahmeeinrichtungen, die auf der Schwerkraft basieren, denjenigen gegenüber bevorzugt sind, die beispielsweise mit einem Elektromotor betrieben werden. Denn bei ersteren kann es nicht zu einer Funkenbildung kommen. Im übrigen werden geschlossene Systeme gegenüber solchen Systemen bevorzugt, bei denen Flüssigkeitsdämpfe freigesetzt werden können.

## Patentansprüche

1. Vorrichtung zur Demontage von Fahrzeugen mit:
zwei zueinander parallel angeordneten, horizontalen Längsstreben (10, 11) zur Auflage eines Fahrzeugs,
mindestens zwei rechtwinklig zu den Längsstreben (10, 11) angeordneten, zueinander parallelen, horizontalen Querstreben (20, 26),
mindestens vier senkrechten Füßen (30), die jeweils an der Unterseite und in den Endbereichen der Längsstreben (10, 11) angebracht sind,
einer parallel zu der rückwärtigen Längsstrebe (11) verlaufenden, in der Draufsicht rechteckigen, begehbaren rückwärtige Arbeitsplattform (40),
mindestens einem treppen- oder leiterförmigen Aufgang (70) zu mindestens einer der begehbaren Arbeitsplattformen (40, 50, 60, 80, 90) und
mindestens einer Flüssigkeitsauffangeinrichtung und/oder mindestens einer Flüssigkeitsabsaugeinrichtung und/oder mindestens einer Tankentleerungseinrichtung, die an dem Gestell direkt oder über eine Verschiebeeinrichtung angebracht ist.
dadurch gekennzeichnet, daß sie zusätzlich umfaßt:
zwei parallel zu den seitlichen Querstreben (20, 26) verlaufende, rechteckige, begehbare seitliche Arbeitsplattformen (50, 60),
und mindestens eine parallel zu der vorderen Längsstrebe (10) verlaufende, rechteckige begehbare vordere Arbeitsplattform (80, 90), die einstückig oder mehrteilig ausgebildet ist und starr an der vorderen Längsstrebe (10) oder dieser gegenüber schwenkbar vorgesehen ist,
wobei im Falle einer starren Anbringung der vorderen Arbeitsplattform (80,90) an der vorderen Längsstrebe (10) die seitlichen und vorderen Bestandteile des Geländers (14,15) der vorderen Arbeitsplattform (80,90) voneinander trennbar und/oder einzeln oder gemeinsam seitlich, rückwärts oder vorwärts vertikal schwenkbar ausgebildet sind.

2. Vorrichtung nach Anspruch 1, dadurch gekennzeichnet, daß
der Abstand der parallelen Längsstreben (10, 11) im wesentlichen der durchschnittlichen Spurbreite von Fahrzeugen entspricht,
auf der Oberseite jeder Längsstrebe (10, 11) mindestens zwei schwellenförmige Mittel (8, 9) zur exakten Ausrichtung eines auf den Längsträgern (10, 11) abgesetzten Fahrzeugs in dessen Längsrichtung vorgesehen sind, wobei diese schwellenförmigen Mittel (8, 9) jeweils so eng benachbart angeordnet sind, daß sie auf das gleiche Rad einwirken,
im Auflagebereich der Fahrzeugräder an den Längsstreben (10, 11) Verbreiterungsplatten angebracht sind,
im Auflagebereich der Fahrzeugräder an der vorderen Längsstrebe (10) zwei im wesentlichen rechteckige Abstreifmittel (6, 7) vorgesehen sind, die im wesentlichen senkrecht auf der oberen Fläche der Längsstrebe (10) angebracht sind und deren Längsachse dicht beabstandet und parallel zur vorderen, oberen Kante der vorderen Längsstrebe (10) verläuft.

3. Vorrichtung nach Anspruch 1 oder 2, dadurch gekennzeichnet, daß eine linke vordere Arbeitsplattform (80) und eine rechte vordere Arbeitsplattform (90) über ein Drehgelenk nach außen schwenkbar mit senkrechten Stützen (12, 13), die auf den Enden der vorderen Längsstrebe (10) vorgesehen sind, verbunden sind, wobei die schwenkbaren Arbeitsplattformen (80, 90) per Hand oder durch elektrische, hydraulische oder pneumatische Antriebsmittel (83) bewegt werden, die zwischen der vorderen Längsstrebe (10) und den rückwärtigen Streben (82) der schwenkbaren Arbeitsplattformen (80, 90) wirken.

4. Vorrichtung nach Anspruch 3, dadurch gekennzeichnet, daß
zur schwenkbaren Verbindung auf den senkrechten Stützen (12, 13) der Längsstrebe (10) und auf den senkrechten Stützen (16, 17), die sich an den seitlichen, äußeren und rückwärtigen Ecken der vorderen schwenkbaren Arbeitsplattformen (80, 90) befinden, jeweils mindestens 2 Lagerböcke (18) ineinandergreifend vorgesehen sind, wobei eine durch jeden Lagerbock senkrecht hindurchragende Welle (19) diese kraftschlüssig miteinander verbindet,
an der Unterseite des inneren Endes der rückwärtigen Strebe (82) der vorderen Arbeitsplattform (80, 90) ein zungenförmiger Vorsprung (22) angebracht ist, der die rückwärtige Strebe (82) nach hinten überragt,
an der Unterseite der vorderen Längsstrebe (10) an einer dem Vorsprung (22) entsprechenden Stelle ein U-profilartiger Auflaufschuh (23) vorgesehen ist, der an die Abmessungen des zungenförmigen Vorsprungs (22) angepaßt ist,
in angeschwenktem Zustand der vorderen Arbeitsplattform der zungenartige Vorsprung (22) kraftschlüssig in den Auflaufschuh (23) eingreift,
ein mechanischer, elektrischer, magnetischer, hydraulischer oder pneumatischer Verriegelungsmechanismus (24, 25) zum Ver- und Entriegeln der angeschwenkten vorderen Arbeitsplattformen vorgesehen ist.

5. Vorrichtung nach einem der vorhergehenden Ansprüche, dadurch gekennzeichnet, daß
die senkrechten Füße (30) mechanisch, elektrisch, hydraulisch oder pneumatisch höhenverstellbar sind, und
der Aufgang (70) über ein an seinem oberen Ende angebrachtes Drehgelenk an einer der Arbeitsplattformen (40, 50, 60, 80, 90) nach oben oder unten schwenkbar oder starr befestigt ist, wobei im Falle einer starren Befestigung zumindest die unterste Trittfläche (31) des Aufgangs höhenverstellbar ist.

6. Vorrichtung nach Anspruch 5, dadurch gekennzeichnet, daß sie umfaßt:
eine horizontale Sockelplatte (91), die über ein Befestigungsmittel starr mit dem Boden (92) verbunden ist,
ein zentriert auf der horizontalen Sockelplatte (91) angebrachtes, im wesentlichen quaderförmiges, senkrechtes Sockelelement (89), das in der Draufsicht geringfügig kleinere Abmessungen als der Innenraum des Fußes (30) aufweist,
einen Verriegelungsstift (98),
wobei das senkrechte, quaderförmige Sockelelement (89) in den hohlen Fuß (30) hineinragt und dieser gegenüber dem Sockelelement (89) vertikal verschiebbar ist, und
wobei das senkrechte Sockelelement (89) mehrere zueinander parallele, übereinander vorgesehene und horizontale Bohrungen (101) aufweist, und
wobei im unteren Bereich des Fußes (30) auf zwei gegenüberliegenden Seiten in gleicher Höhe zwei Bohrungen (102) vorgesehen sind, die bei einer vertikalen Verschiebung des Fußes (30) mit jeder der horizontalen Bohrungen (101) des senkrechten Sockelelements (89) fluchten, und
wobei zur Arretierung des Fußes (30) in einer bestimmten Höhe der Verriegelungsstift (98) durch eine erste Bohrung (102) des Fußes (30), durch irgendeine der Bohrungen (101) des senkrechten Sockelelements (89) und abschließend durch eine zweite Bohrung (102) des Fußes (30) geführt und mit einem Splint (99) gesichert wird, und
wobei die unterste Stufe (31) des Aufgangs (70) über eine in einer Führung (32) mit Stellschraube (33) laufenden Verlängerung (34) der jeweiligen Höhe der Füße (30) angepaßt werden kann.

7. Vorrichtung nach einem der vorhergehenden Ansprüche, dadurch gekennzeichnet, daß die rückwärtige Arbeitsplattform (40) mindestens eine seitliche Arbeitsplattform (50, 60) seitlich überragt, wobei an diesem seitlich überstehenden Abschnitt der rückwärtigen Arbeitsplattform (40) das obere Ende des Aufgangs (70) angebracht ist und wobei bei Betrachtung von oben die Längsachse des Aufgangs (70) parallel zur seitlichen Querstrebe (26) nach vorne, nach hinten oder im rechten Winkel zu dieser verläuft.

8. Vorrichtung nach einem der vorhergehenden Ansprüche, dadurch gekennzeichnet, daß
die begehbaren Arbeitsplattformen (40, 50, 60, 80, 90) sowie der Aufgang (70) jeweils eine Breite im Bereich von 0,20 bis 2,50 m aufweisen, jeweils mit einem Geländer umgeben sind und Gitterroste oder Platten mit einem rutschfesten Belag als Trittflächen aufweisen,
wobei die Trittflächen in Rost- oder Platteneinfassungen gelagert sind, die zwischen benachbarten Querstreben (20, 27; 26, 28), zwischen der rückwärtigen Längsstrebe (11) und einer hierzu parallel und rückwärtig verlaufenden Längsstrebe (5) sowie zwischen den vorderen Streben und den rückwärtigen Streben (82) der vorderen Arbeitsplattform (80, 90) und im Bereich des Aufgangs (70) angebracht sind,
wobei die rückwärtige Arbeitsplattform (40) mit der rückwärtigen Längsstrebe (11) starr oder lösbar verbunden sein kann, wobei im Falle einer lösbaren Verbindung zur Abstützung der rückwärtigen Arbeitsplattform (40) gegebenenfalls mindestens eine von den rückwärtigen Füßen (30) schräg nach oben zu der rückwärtigsten Längsstrebe (5) verlaufende Querstrebe (4) vorgesehen ist.

9. Vorrichtung nach einem der vorhergehenden Ansprüche, dadurch gekennzeichnet, daß in oder auf den Längsstreben (10, 11) und/oder den Querstreben (20, 27; 28, 26) mindestens ein Hubmittel (3) vorgesehen ist.

10. Vorrichtung nach Anspruch 9, dadurch gekennzeichnet, daß
das Hubmittel (3) in Aussparungen der Längsstreben (10, 11) oder der Querstreben (20, 27; 28, 26) oder auf deren Oberfläche auf einem in Längs-und/oder Querrichtung verschiebbaren Schlitten angeordnet ist, und
das Hubmittel elektrisch, hydraulisch oder pneumatisch angetrieben wird.

11. Vorrichtung nach einem der vorhergehenden Ansprüche, dadurch gekennzeichnet, daß an mindestens einer Arbeitsplattform (40, 50, 60, 80, 90) eine galgenartige Einrichtung (39) vorgesehen ist, die mindestens eine Versorgungsleitung trägt und/oder ein windenartiges Hubmittel trägt.

12. Vorrichtung nach einem der vorhergehenden Ansprüche, dadurch gekennzeichnet, daß mindestens an einem Fuß (30) und/oder einer Längsstrebe (10,11) und/oder einer Querstrebe (20, 27; 28, 26) und/oder einer galgenartigen Vorrichtung (39) mindestens eine Versorgungsleitung für eine elektrische und/oder pneumatische und/oder hydraulische Gerätschaft und/oder für eine Absaugeinrichtung und/oder für eine Spüleinrichtung unmittelbar vorgesehen ist.

13. Vorrichtung nach einem der vorhergehenden Ansprüche, dadurch gekennzeichnet, daß die Flüssigkeitsauffangeinrichtung und/oder die Flüssigkeitsabsaugeinrichtung und/oder die Tankentleerungseinrichtung modulartig gegeneinander austauschbar ausgebildet sind.

14. Vorrichtung nach einem der vorhergehenden Ansprüche, dadurch gekennzeichnet, daß eine modulartige Tankentleerungseinrichtung umfaßt:
eine Verschiebeeinrichtung zur Verschiebung in Richtung der x- und y-Achsen
mit zwei horizontalen Führungsschienen (43) gleicher Länge, die einander parallel gegenüberliegend auf gleicher Höhe und parallel zu den Längsstreben (10, 11) an zwei benachbarten Füßen (30) angebracht sind, wobei die gegenüberliegenden Enden der horizontalen Führungsschienen (43) freitragend sind oder über eine vertikale Strebe (42) mit den Längsstreben (10, 11) des Rahmens in Verbindung stehen,
mit zwei parallelen, horizontalen, dicht zueinander beabstandeten und starr miteinander verbundenen Verschiebestangen (44) gleicher Länge, die im rechten Winkel zu den horizontalen Führungsschienen (43) und auf diesen rollend oder gleitend verschiebbar vorgesehen sind,
mit einem verschiebbaren Schlitten, der auf den beiden dicht beabstandeten Verschiebestangen (44) gleitend oder rollend verschiebbar aufliegt,
eine Hubeinrichtung (46), die an dem Schlitten angebracht ist, in Richtung der vertikalen z-Achse wirkt und elektrisch, pneumatisch oder hydraulisch angetrieben wird,
ein auf der Hubeinrichtung (46) vorgesehenes Antriebsmittel (47) zum Antrieb eines Bohr- und/oder Fräsmittels (51) und/oder eines Anstoßdorns, eine Einrichtung zum nach-unten-Biegen der nach oben gerichteten Ränder des Bohrlochs,
ein im wesentlichen ringförmiges Auffanggefäß (48) mit einem oberen Manschettenkragen zum Auffangen des aus dem Tank gewonnenen Treibstoffs, welches über einen Schlauch (77) oder eine Rohrleitung mit einem separaten Treibstoffsammelbehälter in Verbindung steht.

15. Vorrichtung nach einem der vorhergehenden Ansprüche, dadurch gekennzeichnet, daß eine modulartige Flüssigkeitsauffangeinrichtung und/oder Flüssigkeitsabsaugeinrichtung umfaßt:
einen bei seitlicher Betrachtung einem liegendem Buchstaben "U" entsprechenden Verschieberahmen, der eine senkrechte Strebe (62), eine untere horizontale Führungsschiene (63) und eine obere horizontale Führungsschiene (54), die oberhalb der unteren Führungsschiene (63) und parallel zu dieser verläuft, umfaßt,
wobei die seitlichen, freien Schenkel des U-förmigen Verschieberahmens übereinanderliegend starr oder seitlich schwenkbar an einem Fuß (30) angebracht sind, und
wobei das obere Ende des senkrechten Bereichs (62) frei oder an einer der horizontalen Längsstreben (10, 11) oder einer horizontalen Querstrebe (20, 27; 28, 26) befestigt ist,
mindestens eine Verschiebestange (64), die senkrecht zwischen der oberen horizontalen Führungsschiene (54) und der unteren horizontalen Führungsschiene (63) angeordnet ist und gleitend oder rollend zwischen diesen seitlich verschiebbar ist,
mindestens ein Führungsrohr (66), das die senkrechte Verschiebestange (64) lose umschließt, entlang der Verschiebestange (64) in vertikaler Richtung verschiebbar ist und mit Hilfe einer Stellschraube (67) an dieser feststellbar ist,
einen einzelnen horizontalen Arm (68) und/oder eine Kombination von mehreren Armen (68), die über mindestens ein Gelenk (69) miteinander verbunden sind, wobei mindestens ein Arm (68) starr an dem Führungsrohr (66) angebracht ist,
ein weiteres Führungsrohr (71), das senkrecht an dem entgegengesetzten, freien Ende eines Arms (68) angebracht ist und eine Stellschraube (72) aufweist,
eine senkrecht durch das Führungsrohr (71) ragende Verschiebestange (73), die in dem Führungsrohr (71) vertikal verschiebbar angeordnet ist und die mit Hilfe der Stellschraube (72) in dem Führungsrohr (71) arretierbar ist,
ein Auffangmittel (74) mit einer oberen, kragenförmigen Manschette für herabtropfende Flüssigkeiten und/oder ein Ansatzstück für eine Absaugeinrichtung mit einer oberen, kragenförmigen Manschette, wobei diese am oberen Ende der vertikal verschiebbaren Verschiebestange (73) angeordnet sind,
einen Schlauch- oder Rohranschluß (75) zur Anbringung eines Schlauches (77) oder Rohres, über die die gewonnenen Flüssigkeiten abgeführt werden und
mindestens eine Schlauch- oder Rohrführung (76), die den Schlauch (77) oder das Rohr entlang des Arms (68) in Richtung eines Fußes (30), einer Längsstrebe (10, 11) oder einer Querstrebe (20, 27; 28, 26) führt.

16. Vorrichtung nach einem der vorhergehenden Ansprüche, dadurch gekennzeichnet, daß bei frontaler Betrachtung ein Tankentleerungsmodul an einem seitlichen Paar Füße (30) und ein Flüssigkeitsauffangmodul und/oder ein Flüssigkeitsabsaugmodul an dem gegenüberliegenden Paar Füße (30) vorgesehen ist.

17. Vorrichtung nach einem der vorhergehenden Ansprüche, dadurch gekennzeichnet, daß die Flüssigkeitsauffang- oder Absaugeinrichtungen und/oder das Auffanggefäß (48) der Tankentleerungseinrichtung über Schläuche (77) mit Tankbehältern in Verbindung stehen, die in einem separaten Raum untergebracht sind,
wobei jede Flüssigkeitsart einem bestimmten, separaten Tankbehälter zugeführt wird und
wobei die Schläuche (77), ausgehend von der jeweiligen Auffangvorrichtung, auf kürzestem Weg dem Gestell der Vorrichtung zugeführt werden, und in diesem verlaufen.

18. Vorrichtung nach einem der vorhergehenden Ansprüche, dadurch gekennzeichnet, daß sie eine Wanne (84) umfaßt, die im wesentlichen unterhalb einer Fläche ausgebildet ist, die bei Betrachtung von oben durch den äußeren Umfang der Vorrichtung mit angeschwenkten vorderen Arbeitsplattformen (80, 90) begrenzt wird.

19. Vorrichtung nach Anspruch 18, dadurch gekennzeichnet, daß sie umfaßt:
eine Wanne (84),
die auf im wesentlichen stab- oder rohrförmigen, parallel zueinander angeordneten Abstandshaltern (85) vom Boden (92) beabstandet gelagert ist,
die eine Neigung im Bereich von 0,001° bis 10° aufweist, welche entweder durch eine geneigte Ausführung des Bodens (92) oder durch Abstandshalter (85) abgestufter Höhe herbeigeführt wird, wobei die Wanne (84) in Richtung einer Bodenluft-Absaugvorrichtung geneigt ist,
die über einen Wannenboden (86) und seitlich hochgezogene Wandungen (87) verfügt,
die im wesentlichen rechteckige Aussparungen (88) besitzt, die bei Betrachtung von oben an den Querschnitt der Füße (30) und/oder der senkrechten Sockelelemente (89) angepaßt sind, wobei die Aussparungen (88) von seitlich hochgezogenen Wandungen (87) umgeben sind,
eine begehbare, im wesentlichen gitterförmige Abdeckung (93), die von Auflagen (94) abgestützt wird,
eine rampenförmige Umrandung (95) der Wanne (84), die eine am Boden (92) aufliegende, schräg nach oben gerichtete Flanke besitzt, die an ihrem oberen Ende einen senkrecht nach unten weisenden hakenförmigen Vorsprung aufweist, der kraftschlüssig in die senkrechte, seitlich hochgezogene Wandung (87) der Wanne (84) eingreift,
eine auf dem Gitter (93) aufsitzende Manschette (96), die den in ihr vertikal verschiebbaren Fuß (30) lose umschließt,
wobei der gitterseitige, untere Teil (97) der Manschette (96) mindestens soweit aufgeweitet ist, daß er die das senkrechte Sockelelement (89) umgebende, hochgezogene Wandung (87) der Wanne (84) überragt und
wobei die Manschette (96) auf gegenüberliegenden Seiten und in jeweils gleicher Höhe Bohrungen (100) zur Durchführung eines Verriegelungsstifts (98), die mit den horizontalen Bohrungen (101) des senkrechten Sockelelements (89) fluchten, aufweist.

20. Verfahren zur Trockenlegung von Fahrzeugen unter Verwendung der Vorrichtung nach Anspruch 1, dadurch gekennzeichnet, daß
die vorderen Arbeitsplattformen (80, 90), nach dem Entriegeln zur Seite geschwenkt werden oder daß, wenn diese nicht schwenkbar sind, die Geländer (14, 15) der vorderen Arbeitsplattformen (80, 90) umgelegt werden,
ein Gabelstapler ein Fahrzeug von der Seite auf die Gabeln nimmt oder ein Kran das Fahrzeug von oben aufgreift,
das Fahrzeug so auf der Vorrichtung abgesetzt wird, daß die Vorderräder oder Hinterräder zwischen den linken und rechten schwellenförmigen Mitteln (8, 9) zur Ausrichtung eines Fahrzeugs in dessen Längsrichtung zu liegen kommen, und daß der Tank des Fahrzeugs über einem Tankentleerungsmodul liegt, sofern ein solches vorgesehen ist,
nach dem Absetzen des Fahrzeugs der Gabelstapler zurückgefahren wird und die schwenkbaren Arbeitsplattformen (80, 90) angeklappt und verriegelt oder die Geländer der vorderen Arbeitsplattform wieder aufgestellt werden,
man die Tankentleerungseinrichtung (45) des Tankentleerungsmoduls an der Unterseite des Fahrzeugtanks positioniert, mit Hilfe eines Bohrers (51) oder Anstoßdorns den Tank öffnet und unter Verwendung einer hakenförmigen Einrichtung den nach oben gerichteten Rand des Bohrlochs nach unten biegt und den Tank entleert,
man die Flüssigkeitsauffangmittel (74) und/oder die Flüssigkeitsabsaugeinrichtungen unter oder über den entsprechenden Flüssigkeitsauslaß- oder Flüssigkeitseinfüllöffnungen positioniert,
die Verschlüsse der Flüssigkeitsauslaß- und/oder Flüssigkeitseinfüllöffnungen entfernt und Flüssigkeiten wie Motor-, Getriebe-oder Lenkhilfeöle, die Bremsflüssigkeit, die Kühlflüssigkeit, das Kühlmittel einer Klimaanlage und die Scheibenwaschflüssigkeit entleert, beziehungsweise abgesaugt und separaten Behältern zugeführt werden,
daß die Hubzylinder (3) positioniert und einzeln oder synchron nach oben gefahren werden, bis die Fahrzeugachsen entlastet und die Räder frei sind,
daß die Räder des Fahrzeugs mit Hilfe eines pneumatisch oder hydraulisch betriebenen Schlagschraubers abmontiert und einem Sammelbehälter zugeführt werden,
daß der eine Flüssigkeit enthaltende Teil der Stoßdämpfer seitlich angebohrt und die austretende Flüssigkeit mit einer Auffang- oder Absaugvorrichtung (74) gesammelt wird,
daß im Anschluß an die Entleerung der Stoßdämpfer deren Ausbau und Zuführung zu einem Sammelbehälter erfolgt,
daß nach dem Radabbau bei außen liegenden Bremsnippeln die Bremsflüssigkeit mit Hilfe einer Auffang- oder Absaugvorrichtung (74) aufgefangen und/oder abgesaugt und einem Sammelbehälter zugeführt wird,
daß nach der Trockenlegung des Fahrzeugs die vorderen Arbeitsplattformen (80, 90), wenn sie schwenkbar ausgebildet sind, nach dem Entriegeln zur Seite geschwenkt werden oder daß, wenn diese nicht schwenkbar sind, die Geländer (14, 15) umgelegt werden,
daß das trockengelegte Fahrzeug mit Hilfe eines Gabelstaplers oder Krans von der Vorrichtung abgenommen und weiteren Demontagearbeiten zugeführt wird.

## Claims

1. Device for dismantling vehicles comprising:
two horizontal longitudinal struts (10, 11) arranged parallel to each other for positioning the vehicle,
at least two horizontal diagonal struts (20, 26) arranged parallel to each other and at a right angle to the longitudinal struts (10, 11),
at least four vertical feet (30) that are attached to the underside and in the end areas of the longitudinal struts (10, 11),
a walkable rear work platform (40) parallel to the rear longitudinal strut (11) which is rectangular in shape when seen from above,
at least one stair or ladder-like ramp (70) to at least one of the walkable work platforms (40, 50, 60, 80, 90) and
at least one fluid catching receptacle and/or at least one fluid suction device and/or at least one tank voiding device which is mounted on the rack directly or using a sliding installation,
characterized in that it additionally comprises:
two rectangular, walkable lateral work platforms (50, 60) parallel to the lateral diagonal struts (20, 26),
and at least one rectangular front work platform (80, 90) running parallel to the front longitudinal strut (10) which is constructed in one or several segments and is attached rigidly to the front longitudinal strut (10) or swinging opposite it,
where in a case of a rigid attachement of the front work platform (80, 90) at the front longitudinal strut (10), the lateral and front segments of the railing (14, 15) of the front work platform (80, 90) can be separated from one another and/or can be vertically swiveled individually or together to the side, backward or forward.

2. A device according to claim 1, characterized in that the distance of the parallel longitudinal struts (10,11) essentially corresponds with the average vehicle wheel base width, at least two threshold-like objects (8,9) are installed on the top of each longitudinal strut (10,11) for exact alignment of vehicle positioned on the longitudinal carriers in its longitudinal direction, wherein these threshold-like objects (8,9) are placed so close to each other that they affect the same wheel, extension plates are mounted on the longitudinal struts (10,11) in the positioning area for vehicles' wheels, and two essentially rectangular strip devices (6,7) are mounted essentially vertical on the upper surface of the frontal longitudinal strut (10) and whose longitudinal axis is at a close distance and runs parallel to the front upper edge of longitudinal strut (10).

3. A device according to claim 1 or 2, characterized in that a left front work platform (80) and a right front work platform (90) are outward swivelable mounted via a pivot joint on vertical supports (12,13) at the ends of the front longitudinal strut (10) and are connected in a manner that swivelable work platforms (80,90) can be moved manually or with electric, hydraulic or pneumatic devices (83) working between the front longitudinal strut (10) and the rear struts (82) of the swivelable work platforms (80,90).

4. A device according to claim 3, characterized in that at least two meshed fixed-pivot swivel brackets (18) are installed for the swivelable connection on the vertical supports (12,13) of the longitudinal strut (10) and on the vertical supports (16,17) located on the side, outer and rear ends of the front swivelable work platforms (80,90), wherein a vertically extending shaft (19) through each fixed-pivot swivel bracket positively connects them,
a tongue-shaped protrusion (22) is attached to the underside of the inner end of the rear strut (82) of the front work platform (80,90) which overtops backwardly the rear strut (82),
a U-shaped bumper shoe (23) is attached to the underside of the front strut (10) at a location corresponding with the protrusion (22) which is aligned to the dimensions of the tongue-shaped protrusion (22), the tongue-shaped protrusion (22) meshes positively in the bumper shoe (23) when the front work platform is swiveled close,
a mechanical, electric, magnetic, hydraulic or pneumatic locking mechanism (24,25) is present for locking and unlocking the swiveled front work platform.

5. A device according to one of the claims above,
characterized in that
the vertical feet (30) can be height adjusted by mechanical, electric, hydraulic or pneumatic means, the ascent (70) can be swiveled upward or downward or is rigidly installed via a pivot joint attached to its upper end and at one of the work platforms (40, 50, 60,80,90), wherein in case of a rigid mounting, at least the lowest step (31) of the ascent can be adjusted in height.

6. A device according to claim 5, characterized in that it comprises:
a horizontal pedestal plate (91) connected rigidly with the floor (92) via a fastener,
an essentially square vertical pedestal element (89) centered attached to the horizontal pedestal plate (91), wherein seen from above it has slightly smaller dimensions than the interior space of the foot (30), a locking pin (98),
wherein the vertical, square pedestal element (89) extends into the hollow foot (3), and the foot can be moved vertically versus the pedestal element (89) and wherein the vertical pedestal element (89) has several borings parallel and placed above each other and horizontal (101) and
wherein two borings (102) are provided in the lower part of the foot (3) on two opposite sides at equal height that align with each of the horizontal bores (101) of the vertical pedestal element (89) with each vertical movement of the foot (30), and
wherein the locking pin (98) is guided through a first bore (102) in the foot (30), through any bore (101) of the vertical pedestal element (89) and finally through a second bore (102) of the foot (30) and secured with a splint (99) to arrest the foot (30) in a certain height, and
wherein the lowest step (31) of the ascent can be aligned with a locking screw (32) to the height of the feet (30) via an extension (34) running over a runner (32).

7. A device according to one of the above claims, characterized in that the rear work platform (40) overtops at least one lateral work platform (50,60) to the side, wherein the upper end of the ascent (70) is attached at this laterally overtopping segment of the rear work platform and wherein the longitudinal axis of the ascent (70) runs parallel to the lateral diagonal strut (26) toward the front, the back or at a right angle to it when seen from above.

8. A device according to one of the claims above,
characterized in that the walkable work platforms (40,50,60,80,90) as well as the ramp (70) are each between 0.20 to 2.50 m wide, surrounded by a railing and have grates or tiles with slip resistant coating as walking surfaces,
wherein the walking surfaces are installed in grate or tile frames which are mounted between adjacent diagonal struts (20,27;26,28), between the rear longitudinal strut (11) and a longitudinal strut (5) that runs parallel and behind the former, as well as between the front and the rear struts (82) of the front work platform (80,90) and in the area of the ascent (70),
the rear work platform (40) can be connected rigidly or loosely with the rear longitudinal strut (11), wherein in case of a releasing connection, at least one diagonal strut (4) runs from the rear feet (30) diagonally upward to the rear longitudinal strut (5) for supporting the rear work platform (40).

9. A device according to one of the claims above,
characterized in that at least one lifting device is provided in or on the longitudinal struts (10,11) and/or the diagonal struts (20,27;28,26).

10. A device according to claim 9, characterized in that the lifting device is arranged in recesses of the longitudinal struts (10,11) or the diagonal struts (20,27;28,26) or on their surfaces on a sled moveable in longitudinal and/or diagonal direction, and wherein the lifting device has an electric, hydraulic or pneumatic drive.

11. A device according to one of the claims above,
characterized in that a gallows-like device (39) is provided on at least one work platform (40,50,60,80,90) wherein the gallows-like device holds a supply line and/or a winch-like lifting device.

12. A device according to one of the claims above, characterized in that at least one supply line for an electric and/or pneumatic and/or hydraulic tools and/or for a suction device and/or for a rinsing device is directly provided at least on one foot (30) and/or one longitudinal strut (10,11) and/or at a diagonal strut (20,27;28,26) and/or at a gallows-like device (39).

13. A device according to one of the claims above, characterized in that the fluid catching device and/or the fluid suction device and/or the tank voiding device are mutually exchangeable modules.

14. A device according to one of the claims above, characterized in that a module-like tank voiding device comprises:
a sliding device for sliding in the direction of the x and y axes,
having two horizontal guide tracks (43) of equal length mounted parallel in the same height and parallel to the longitudinal struts (10,11) on two adjacent feet (30), wherein the opposing ends of the horizontal guide tracks (43) are either self-contained or connected via a vertical strut (42) with the longitudinal struts (10,11) of the frame,
having two parallel, horizontal slide rods (44) of equal length, connected close and rigid to each other, which are moveable in a rolling or sliding motion on the horizontal guide tracks (43) at a right angle to them,
having a moveable sled that rests on the two slide rods (44) connected close to each other and that can be moved sliding or rolling,
a lifting device (46) attached to the sled and working in the direction of the vertical z-axis with an electric, pneumatic or hydraulic drive,
a drive (47) on the lifting device (46) for operating a drill and/or cutter (51) and/or a mandrel a device for bending the upward edges of the bore hole down,
an essentially ring-shaped catching receptacle (48) with an upper cuff collar for catching the fuel drained from the tank, wherein the receptacle is connected via a hose (77) or a pipeline with a separate fuel collection container.

15. A device according to one of the claims above, characterized in that a modular fluid catching device and/or fluid suction device comprises:
a sliding frame which looks from the side like a lying letter "U" which comprises a vertical strut (62), a lower horizontal guide track (63) and an upper horizontal guide track (54) running above the lower guide track (63) and parallel to it,
wherein the lateral free sides of the U-shaped sliding frame are attached above one another rigidly or laterally swivelable at a foot (30), and
wherein the upper end of the vertical area (62) is free or attached at one of the horizontal struts (10,11) or at a horizontal diagonal strut (20,27;26,28),
at least one sliding rod (64) that is attached vertically between the upper horizontal guide track (54) and the lower horizontal guide track (63) and can be moved laterally between them in a gliding or rolling motion,
at least one guide pipe (66) which surrounds the vertical sliding rod (64) loosely and can slide along the slide rod (64) in vertical direction
and can be fastened to it with a locking screw (67), a single horizontal arm (68) and/or a combination of several arms (68) connected with one another via a joint (69), wherein at least one arm (68) is rigidly attached to the guide pipe (66),
another guide pipe (71) that is mounted vertically on the opposite free end of an arm (68) and has a lock screw (72),
a slide rod (73) extending vertically through the guide pipe (71) that is vertically movable and can be arrested with the lock screw (72) in the guide pipe (71),
a receptacle (74) with an upper, collar-like cuff for dripping fluids and/or a fitting for a suction device with an upper collar-like cuff, wherein the cuff and/or the fitting are installed at the upper end of the vertically movable slide rod (73),
a hose or pipe connector (75) for attaching a hose (77) or pipe through which the drained fluids can be transported away, and
at least one hose or pipe duct (76) running the hose (77) or the pipe along the arm (68) in the direction of a foot (30), of a longitudinal strut (10,11) or of a diagonal strut (20,27;26,28).

16. A device according to one of the claims above, characterized in that in front view a tank voiding module is mounted on a lateral pair of feet (30) and a fluid catching module and/or fluid suction module at the opposite pair of feet (30).

17. A device according to one of the claims above,
characterized in that the fluid catching or suction devices and/or the receptacle (48) of the tank voiding device are connected with storage tanks in a separate room via hoses (77), wherein each type of fluid is fed into a specific separate tank, and
wherein the hoses (77) from each of the catching modules are led by the shortest path to the scaffold of the device and run into it.

18. A device according to one of the claims above, characterized in that it comprises a basin (84) that lies below a plane which, seen from above, is limited by the external circumference of the device with the front work platforms (80,90) swiveled close.

19. A device according to one of the claims above, characterized in that it comprises:
a basin (84),
which is installed on staff or tube-like parallel lengthening pieces (85) at a distance from the floor (92),
the basin is inclined by 0,001° to 10° which is done trough an inclined design of the floor (92) or by the lengthening pieces (85) in graduated height, wherein the basin (84) is inclined in the direction of a floor air suction device,
the basin has a basin floor (86) and lateral high walls (87), and has essentially rectangular recesses (88) that are (when seen from top) aligned to the cross-section of the feet (30) and/or the top of the vertical pedestal elements (89), wherein the recesses (88) are surrounded by lateral high walls,
a walkable, essentially grate-like cover (93) supported by supports (94),
a ramp-like surrounding (95) of the basin (84) with diagonally upward point flank resting on the floor (92) which has a vertically downward pointing hook-like protrusion at its upper end which meshes positively in the vertical, lateral high walls (87) of the basin, a cuff (96) seated on the grate (93) loosely surrounding the vertically movable foot (30),
wherein the grate-side lower part (97) of the cuff (96) is at least widened so far that it overtops the high wall (87) of the basin (84) which surrounds the vertical pedestal element (89), and
wherein the cuff (96) has borings (100) on opposite sides and at the same height for insertion of a locking pin (98) which align with the horizontal bore (101) of the vertical pedestal element (89).

20. Process for draining vehicles by means of the device according to claim 1, characterized in that
the front work platforms (80,90) can be swiveled to the side after unlocking or that, if they cannot swivel, they have a railing (14,15) on the front work platforms (80,90) that can be folded over,
a forklift picks up a vehicle from its side or a crane picks up the vehicle from the top,
the vehicle is placed on the device in such a way that the front or rear wheels are located between the left and right guide bumps (8,9) for aligning the vehicle in its length direction, and that the vehicle tank is located above a tank voiding module, if such is provided,
after placing the vehicle, the forklift is backed up and the swivelable work platforms (80,90) are closed and locked or the railings of the front work platform are returned to an upright position,
the tank voiding device (45) of the tank voiding module is placed to the underside of the vehicle tank and the tank is opened with the aid of a drill (51) or a mandrel, the upward edges of the bore hole are bent down with a hook-shaped device, and the tank is emptied,
the fluid catching devices (74) and/or the fluid suction devices are postioned below or above the respective fluid outlet or fluid inlet openings,
the covers on fluid outlet or inlet openings are removed and fluids, such as motor, crank, steering oils, brake fluid, coolant for the motor, antifreeze and coolant for the air conditioner and the window washing liquid are emptied or suctioned out and fed into separate containers,
the lift cylinders (3) are positioned and lifted individually or together upward, until the vehicle axles are relieved and when the wheels freed, the wheels of the vehicle are removed with a pneumatic or hydraulic impact screw driver and transported to a collection container, the parts of the shock absorbers containing fluids are drilled open and the fluid is collected with a catching or suction device (74),
the shock absorbers are dismantled and placed in a container after emptying the fluids,
after the wheel removal, the brake fluid of external brake nipples is collected and/or suctioned off with a catching or suction device (74) and transported to a collection container,
after draining the vehicle, the front work platforms (80,90), if they are swivelable, are swiveled aside after unlocking, and if they are not swivelable, the railings (14,15) are folded down,
and the drained vehicle is lifted from the device by a forklift or a crane and transported to further dismantling operations.

## Revendications

1. Dispositif pour le démontage de véhicules avec:
deux traverses longitudinales (10,11) horizontales, disposées parallèlement l'une à l'autre et destinée à supporter un véhicule,
au moins deux traverses transversales (20,26) horizontales, disposées parallèlement l'une à l'autre et à angle droit par rapport aux traverses longitudinales (10,11),
au moins quatre pieds (30) verticaux respectivement placés sur la partie inférieure et à la hauteur des extrémités des traverses longitudinales (10,11),
une plate-forme de travail (40) arrière, de plan rectangulaire, parallèle à la traverse longitudinale (11) arrière et sur laquelle il est possible de se déplacer,
au moins une montée (70) en forme d'escalier ou d'échelle amenant à au moins une des plates-formes de travail (40,50,60,80,90) sur lesquelles il est possible de se déplacer et
au moins une installation collectrice de liquides et/ou au moins une installation d'aspiration de liquides et/ou au moins une installation de vidange de réservoir disposées sur le cadre, directement ou par l'intermédiaire d'un dispositif coulissant,
caractérisé en ce qu'il comprend en outre:
deux plates-formes de travail (50,60) rectangulaires latérales, parallèles aux traverses transversales (20,26) et sur lesquelles il est possible de se déplacer
et au moins une plate-forme de travail (80,90) rectangulaire avant, parallèle à la traverse longitudinale (10) avant et sur laquelle il est possible de se déplacer, cette plate-forme étant monobloc ou en plusieurs parties et prévue pour un montage rigide sur la traverse longitudinale avant (10) ou articulé par rapport à celle-ci,
les éléments du garde-fou (14,15) de la plate-forme de travail avant (80,90) étant séparables les uns des autres et/ou articulables latéralement, verticalement vers l'avant ou l'arrière de manière individuelle ou en commun dans le cas où la plate-forme avant (80,90) est attachée rigidement à la traverse longitudinale avant (10).

2. Dispositif selon la revendication 1 caractérisé en ce que
la distance entre les traverses longitudinales (10,11) parallèles correspond sensiblement à l'écartement moyen des roues d'un véhicule,
au moins deux moyens (8,9) en forme de seuil disposés sur la surface supérieure de chaque traverse longitudinale (10,11) sont prévus pour un alignement exact dans le sens longitudinal d'un véhicule déposé sur les longerons (10,11), ces moyens (8,9) étant placés suffisament proches les uns des autres pour agir sur la même roue,
des plaques d'élargissement sont placées sur les traverses longitudinales (10,11) à la hauteur de la zone d'appui des roues du véhicule,
on a prévu sur la traverse longitudinale avant (10) à la hauteur de la zone d'appui des roues du véhicule deux moyens de raclage (6,7) sensiblement rectangulaires, disposés de manière sensiblement verticale sur la surface supérieure de la traverse longitudinale (10) et dont l'axe longitudinal est très proche du bord avant supérieur de la traverse longitudinale avant (10) et parallèle à celui-ci.

3. Dispositif selon la revendication 1 ou 2 caractérisé en ce qu'une plate-forme de travail avant gauche (80) et une plate-forme de travail avant droite (90) sont reliées pivotables vers l'extérieur et au moyen d'une articulation à charnière avec des montants (12,13) prévus aux extrémités de la traverse longitudinale avant (10), ces plates-formes (80,90) orientables pouvant être déplacées manuellement ou sous l'effet de moyens de commande (83) électriques, hydrauliques ou pneumatiques, lesquels agissent entre la traverse longitudinale avant (10) et les traversess arrières (82) des plates-formes de travail (80,90) orientables.

4. Dispositif selon la revendication 3 caractérisé en ce que
pour permettre une jonction articulée, on a prévu au moins deux paliers (18) respectifs mordant l'un dans l'autre sur les montants (12,13) de la traverse longitudinale (10) et sur les montants (16,17) qui se trouvent aux angles latéraux, extérieurs et arrières de la plate-forme de travail avant orientable, alors qu'un arbre (19) faisant verticalement saillie à travers chaque palier (18) les relie par force,
sur la partie inférieure de l'extrémité intérieure de la traverse arrière (82) de la plate-forme de travail avant (80,90), on a disposé un avancement (22) en forme de langue qui dépasse en hauteur et vers l'arrière la traverse (82) arrière,
on a prévu sur la partie inférieure de la traverse longitudinale avant (10) et à un endroit correspondant à l'avancement (22) un patin d'arrêt (23) ressemblant à un profilé en U, lequel est adapté aux dimensions de l'avancement en forme de langue (22),
l'avancement en forme de langue (22) mord de force dans le patin d'arrêt (23) lorsque la plate-forme de travail avant est rabattue,
on a prévu un mécanisme (24,25) mécanique, électrique, hydraulique ou pneumatique pour le verrouillage et déverrouillage des plates-formes avant rabattues.

5. Dispositif selon l'une des revendications précédentes caractérisé en ce que
on peut régler mécaniquement, électriquement, hydrauliquement ou pneumatiquement la hauteur des pieds verticaux (30) et
la montée (70) est fixée rigide ou pivotante vers le haut ou le bas à l'une des plates-formes de travail (40,50,60,80,90) au moyen d'une articulation disposée sur son extrémité supérieure sachant qu'en cas de fixation rigide, il est possible de régler la hauteur d'au moins la première marche (31) du bas de la montée (70).

6. Dispositif selon la revendication 5 caractérisé en ce qu'il comprend:
une plaque de fondation (91) horizontale reliée rigidement au sol (92) par l'intermédiaire d'un moyen de fixation,
un élément socle (89) vertical, de forme sensiblement parallélépipédique, disposé de façon centrée sur la plaque de fondation (91) horizontale et dont les dimensions, vues d'en haut, ne sont que legèrement inférieures à celles de l'intérieur du pied (30),
un tenon de verrouillage (98),
l'élément socle (89) vertical et de forme sensiblement parallélépipédique faisant saillie dans le pied (30) creux, lequel peut se déplacer verticalement par rapport à ce même élément socle (89), et
l'élément socle (89) vertical présentant plusieurs alésages (101) horizontaux, parallèles les uns aux autres et prévus en plusieurs rangées situées les unes u-dessus des autres, alors que
dans la partie inférieure du pied (30), on a prévu à la même hauteur deux alésages (102) sur deux côtés opposés, ces alésages (102) s'alignant avec chaque alésage (101) horizontal de l'élément socle (89) vertical lorsque le pied (30) se déplace verticalement,
que pour arrêter le pied (30) à une certaine hauteur, le tenon de verrouillage (98) est guidé par un premier alésage (102) du pied (30), par l'un des alésages (101) de l'élément socle (89) vertical, puis par un second alésage (102) du pied avant d'être bloqué au moyen d'une goupille cylindrique fendue (99) et
qu'un prolongement (34) passant dans un guide (32) avec une vis de réglage (33) permet d'ajuster la première marche (31) de la montée (70) à la hauteur respective du pied (30).

7. Dispositif selon l'une des revendications précédentes caractérisé en ce que la plate-forme de travail arrière (40) dépasse latéralement au moins une plate-forme de travail (50,60) latérale alors que l'extrémité supérieure de la montée (70) est disposée sur cette section de la plate-forme de travail arrière (40) qui fait latéralement saillie et que l'axe longitudinal de la montée (70), vu d'en haut, s'étend parallèlement à la traverse transversale latérale (26) vers l'avant, vers l'arrière ou en formant un angle droit par rapport à celle-ci.

8. Dispositif selon l'une des revendications précédentes caractérisé en ce que
les plates-formes de travail (40,50,60,80,90) permettant le déplacement ainsi que la montée (70) sont respectivement d'une largeur comprise entre 0,20 et 2,50 m, respectivement entourées d'un garde-fou et pourvues de caillebotis ou de plaques recouverts d'un revêtement anti-dérapant, lesquels servent de zones de passage,
les zones de passage étant logées dans des grilles ou plaques qui servent de rebords et sont disposées entre des traverses transversales (20,27;26,28) voisines, entre la traverse longitudinale (11) arrière et une traverse longitudinale (5) qui s'étend parallèlement et vers l'arrière par rapport à la traverse (11) ainsi qu'entre les traverses avant et arrière (82) de la plate-forme de travail avant (80,90) et à la hauteur de la montée (70),
la plate-forme de travail arrière (40) avec la traverse longitudinale arrière (11) pouvant être fixée de façon rigide ou détachable sachant qu'en cas de jonction détachable, on a le cas échéant prévu au moins une traverse transversale (4) qui part des pieds arrière (30) et monte obliquement jusqu'à la traverse longitudinale (5) située le plus en arrière, et ce de manière à soutenir la plate-forme de travail (40) arrière.

9. Dispositif selon l'une des revendications précédentes caractérisé en ce qu'on a prévu au moins un moyen de levage (3) dans ou sur les traverses longitudinales (10,11) et/ou transversales (20,27;28,26).

10. Dispositif selon la revendication 9 caractérisé en ce que
le moyen de levage (3) est disposé dans des évidements des traverses longitudinales (10,11) ou transversales (20,27;28,26) ou sur la surface de celles-ci dans des chariots pouvant se déplacer dans le sens longitudinal et/ou transversal et
en ce qu'il est entraîné électriquement, hydrauliquement ou pneumatiquement.

11. Dispositif selon l'une des revendications précédentes caractérisé en ce qu'on a prévu sur au moins une plate-forme de travail (40,50,60,80,90) une installation (39) en forme de potence qui porte au moins une conduite d'alimentation et/ou un moyen de levage de type treuil.

12. Dispositif selon l'une des revendications précédentes caractérisé en ce qu'on a directement prévu au moins une conduite d'alimentation sur au moins un pied (30) et/ou une traverse longitudinale (10,11) et/ou une traverse transversale (20,27;28,26) et/ou une installation en forme de potence (39), et ce pour un appareillage électrique et/ou pneumatique et/ou hydraulique et/ou pour une installation d'aspiration et/ou pour un dispositif de lavage.

13. Dispositif selon l'une des revendications précédentes caractérisé en ce que l'installation collectrice de liquides et/ou l'installation d'aspiration de liquides et/ou l'installation de vidange de réservoir présentent la forme de modules interchangeables.

14. Dispositif selon l'une des revendications précédentes caractérisé en ce qu'une installation modulable de vidange de réservoir comprend:
un dispositif de déplacement permettant la translation dans le sens des axes x et y
avec deux rails de guidage (43) horizontaux et de même longueur qui sont placés sur deux pieds (30) voisins de manière à se faire face parallèlement et à la même hauteur et à être parallèles aux traverses longitudinales (10,11), les extrémités opposées des rails de guidage horizontaux (43) étant non soutenues ou raccordées aux traverses longitudinales (10,11) du cadre par l'intermédiaire d'une traverse verticale (42),
avec deux barres de coulissement (44) de même longueur, lesquelles sont parallèles, horizontales, très proches l'une de l'autre et reliées fixement les unes aux autres, sachant qu'on a prévu des barres pouvant se déplacer à angle droit par rapport aux rails de guidage (43) horizontaux, et ce en glissant ou en roulant sur ceux-ci,
avec un chariot mobile reposant sur les deux barres de coulissement (44) très proches l'une de l'autre de manière à pouvoir s déplacer en glissant ou en roulant,
une installation de levage (46), placée sur le chariot, agissant dans le sens de l'axe z vertical et étant entraînée électriquement, pneumatiquement ou hydrauliquement,
un moyen moteur (47) étant prévu sur l'installation de levage (46) de manière à commander un élément de forage et/ou de fraisage (51) et/ou un mandrin à choc, dispositif destiné à recourber vers le bas les bords de la forure initialement tournés vers le haut,
alors qu'un collecteur (48) de forme sensiblement annulaire avec une manchette pour la récupération du carburant issu du réservoir est raccordé au moyen d'un tuyau flexible (77) ou d'une conduite rigide avec un récipient indépendant de récupération du carburant.

15. Dispositif selon l'une des revendications précédentes caractérisé en ce qu'une installation modulaire collectrice de liquides et/ou d'aspiration de liquides comprend:
un cadre de déplacement représentant un ,,U" couché lorsqu'on le regarde de côté et pourvu d'une traverse (62) verticale, d'un rail de guidage (63) inférieur horizontal et d'un rail de guidage supérieur horizontal (54) lequel est situé au-dessus du rail de guidage inférieur (63) et y est parallèle,
sachant que les côtés latéraux libres du cadre de déplacement en forme de U sont disposés l'un au-dessus de l'autre et raccordés rigides ou orientables latéralement à un pied (30), et
que l'extrémité supérieure de la partie verticale (62) est attachée librement ou fixée à l'une des traverses longitudinales (10,11) horizontales ou à une traverse transversale (20,27;28,26) horizontale,
au moins une barre de coulissement (64), disposée verticalement entre le rail de guidage supérieur horizontal (54) et le rail de guidage inférieur horizontal (63), pouvant se déplacer latéralement en glissant ou roulant entre ces deux rails,
au moins un tube conducteur (66), lequel entoure avec du jeu la barre de coulissement (64) verticale, peut coulisser verticalement le long de cette barre (64) et être bloqué sur celle-ci à l'aide d'une vis de serrage (67),
un bras (68) horizontal unique et/ou une combinaison de plusieurs bras (68) reliés les uns aux autres par au moins une articulation (69), sachant qu'un bras (68) au moins est fixé rigidement au tube conducteur (66),
un second tube conducteur (71) disposé verticalement sur l'extrémité opposée libre d'un bras (68) et pourvu d'une vis de serrage (72),
une barre de coulissement (73) faisant saillie verticalement hors du tube conducteur (71), disposée verticalement dans ce dernier (71) de manière à pouvoir coulisser et pouvant être arrêtée dans ce même tube (71) au moyen d'une vi de serrage (72),
un moyen collecteur (74) avec une manchette supérieure en forme de col destinée à recevoir les gouttes de liquide et/ou un embout pour une installation d'aspiration avec une manchette supérieure en forme de col, ces éléments étant disposés sur l'extrémité supérieure de la barre de coulissement (73) mobile verticalement,
un raccord (75) pour tuyau flexible ou rigide destiné au branchement d'un tuyau souple (77) ou d'une conduite servant à évacuer les liquides récupérés et
au moins un guide (76) pour tuyau souple ou rigide, lequel amène le tuyau flexibe (77) ou la conduite le long du bras (68) vers un pied (30), une traverse longitudinale (10,11) ou transversale (20,27;28,26).

16. Dispositif selon l'une des revendications précédentes caractérisé en ce qu'on a prévu un module de vidange de réservoir qui, vu de face, est situé sur une paire de pieds latéraux (30) et un module collecteur de liquides et/ou un module d'aspiration de liquides disposé(s) sur la paire de pieds (30) opposée.

17. Dispositif selon l'une des revendications précédentes caractérisé en ce que des tuyaux flexibles (77) raccordent les installations collectrices de liquide ou d'aspiration et/ou le collecteur (48) de l'installation de vidange de réservoir à des citernes placées dans un espace indépendant,
alors que les liquides sont évacués vers des citernes données distinctes en fonction de la nature du liquide et
les tuyaux flexibles (77) partant du dispositif de récupération respectif sont amenés au cadre du dispositif suivant le chemin le plus court et passent dans ce même cadre.

18. Dispositif selon l'une des revendications précédentes caractérisé en ce qu'il comprend une cuve (84) formée essentiellement en-dessous d'une surface dont les limites correspondent au périmètre extérieur du dispositif avec plates-formes de travail avant (80,90) pivotées, lorsqu'on regarde le dispositif d'en haut.

19. Dispositif selon la revendication 18 caractérisé en ce qu'il comprend:
une cuve (84),
placée à une certaine distance du sol (92) sur des écarteurs (85) essentiellement en forme de barre ou de tube et parallèles les uns aux autres,
présentant une inclinaison comprise entre 0,001° et 10° due soit à la pente du sol (92) ou à la présence d'écarteurs (85) de hauteur graduelle, et étant inclinée en direction d'un dispositif d'aspiration à air ambiant,
pourvue d'un fond (86) et de parois (87) latéralement relevées,
présentant des évidements (88) essentiellement rectangulaires qui, vus d'en haut, sont adaptés à la section des pieds (30) et/ou des éléments socles (89) verticaux et qui sont entourés de parois (87) latéralement relevées,
une couverture (93) essentiellement treillissée sur laquelle on peut se déplacer et qui est soutenue par des pièces de repos (94),
une bordure (95) en forme de rampe pour la cuve (84), laquelle est pourvue d'un flanc reposant sur le sol (92), dressé obliquement vers le haut et dont l'extrémité supérieure présente un épaulement en forme de crochet tourné verticalement vers le bas, lequel mord de force dans la paroi (87) latéralement relevée de la cuve (84),
une manchette (96) assise sur le treillis (93) et entourant avec du jeu le pied (30) qui peut coulisser verticalement à l'intérieur,
sachant que la partie inférieure (97) de la manchette (96), tournée vers le treillis, est au moins suffisament élargie pour dépasser en hauteur la paroi (87) relevée de la cuve (87) qui entoure l'élément socle (89) vertical et
que la manchette (96) présente sur ses côtés opposés et à la même hauteur des alésages (100) permettant le passage d'un tenon de verrouillage (98) et alignés avec les alésages (101) horizontaux de l'élément socle (89) vertical.

20. Procédé pour vider les réservoirs d'un véhicule avec utilisation du dispositif selon la revendication 1, caractérisé en ce que
les plates-formes avant (80,90) sont pivotées vers le côté après le déverrouilage ou en ce que, lorsqu'elles ne sont pas pivotantes, leurs garde-fous (14,15) sont renversés,
un chariot élévateur à fourche monte un véhicule de côté sur sa fourche ou une grue saisit le véhicule par le haut,
le véhicule est déposé sur le dispositif de manière à ce que les roues avant ou arrière soient placées entre les moyens (8,9) gauches et droits en forme de seuil permettant d'aligner le véhicule dans le sens longitudinal et que le réservoir du véhicule se trouve au-dessus d'un module de vidange de réservoir lorsque celui-ci est prévu,
on recule le chariot élevateur après avoir déposé le véhicule, puis on rabat et verrouille les plates-formes de travail (80,90) pivotantes ou on remonte les garde-fous de la plate-forme de travail avant,
on positionne sous la partie inférieure du réservoir l'installation de vidange de réservoir (45) dont est pourvu le module de vidange, on ouvre le réservoir en s'aidant d'un foret (51) ou d'un mandrin à choc et avec un dispositif en forme de crochet, on recourbe vers le bas le bord de la forure initialement tourné vers le haut avant de vider le réservoir,
on positionne le moyen collecteur du liquide (74) et/ou les dispositifs d'aspiration du liquide en-dessous ou au-dessus des ouvertures de vidange ou de remplissage correspondantes,
on enlève les bouchons des ouvertures de vidange et/ou de remplissage et on vide ou aspire les différentes susbtances liquides telles que les huiles pour moteur, les huiles à engrenages ou les huiles pour direction assistée, le liquide de frein, le liquide de refroidissement, l'agent refroidisseur d'une climatisation ou le liquide pour lave-glace avant de les évacuer vers des récipients distincts,
les cylindres de levage (3) sont positionnés puis montés de façon individuelle ou synchronisée jusqu'à ce que les essieux du véhicule soient déchargés et que les roues tournent dans le vide,
on démonte les roues du véhicule en s'aidant d'un tournevis à frapper pneumatique ou hydraulique et on les met dans un conteneur de récupération,
on perce latéralement la partie des amortisseurs contenant une substance liquide et on récupère le liquide qui s'écoule à l'aide d'un dispositif collecteur ou d'aspiration (74),
après avoir vidé les amortisseurs, on procède à leur démontage et à leur évacuation dans un conteneur,
après le démontage des roues, on récupère ou aspire le liquide de frein à la hauteur des nipples de frein extérieurs avec le dispositif collecteur ou d'aspiration (74) et on l'évacue vers un récipient de récupération,
après avoir vidé tous les réservoirs du véhicule et procédé au déverrouillage, on fait pivoter sur le côté les plates-formes de travail avant (80,90) lorsque celles-ci sont pivotantes ou, si cela n'est pas le cas, on renverse les garde-fous (14,15),
on descend du dispositif le véhicule ainsi vidangé en s'aidant du chariot élévateur à fourche ou de la grue afin de procéder aux opérations de démontage suivantes.
